# EUROPEAN PATENT APPLICATION

(11) **EP 4 819 342 A1**
(43) Date of publication of application: **07.10.2026**
(21) Application number: 23960611.4
(22) Date of filing: 08.12.2023
(51) Int. Cl.: H01M 50/30

(54) **BATTERY CELL, BATTERY, AND ELECTRIC DEVICE**

(71) Applicant: Contemporary Amperex Technology Co., Limited, Ningde, Fujian 352100 (CN)
(72) Inventor: XING, Chengyou, Ningde, Fujian 352100 (CN); MENG, Wanqiu, Ningde, Fujian 352100 (CN); JIN, Haizu, Ningde, Fujian 352100 (CN); LI, Quankun, Ningde, Fujian 352100 (CN); WANG, Peng, Ningde, Fujian 352100 (CN)
(74) Representative: Kraus & Lederer PartGmbB
(86) International application number: PCT/CN2023/137671
(87) International publication number: WO 2025/118300

(57) **Abstract**

The present application discloses a battery cell, a battery, and an electric device. The battery cell comprises a casing and a gas permeable membrane assembly; the casing has a wall part, the wall part is provided with a first exhaust hole, and the first exhaust hole makes the interior of the casing and the exterior of the casing communicated; the gas permeable membrane assembly is arranged on the wall part, the gas permeable membrane assembly comprises a gas permeable membrane, and the gas permeable membrane assembly covers the first exhaust hole. In the present application, on the basis of the arrangement, gas inside the battery cell in a sealed state can be discharged through the gas permeable membrane, and gas inside the battery casing is discharged out of the casing in time, thus preventing the air pressure in the battery casing from being too high, reducing the risk that a pressure relief mechanism opens a valve in advance, and greatly prolonging the service life of the battery.

## Description

### TECHNICAL FIELD

The present application relates to the technical field of new energy, and specifically relates to a battery cell, a battery, and an electrical device.

### BACKGROUND

With the continuous intensification of global energy and environmental problems, new energy, as one of the sustainable development fields, is developed rapidly. Batteries are increasingly widely used as a new form of energy and face high requirements for reliability and service life. During the charge-discharge process of the batteries, gas generated in the batteries will can lead to an increase in internal pressure; in order to ensure the safety of battery cells, pressure relief mechanisms are generally arranged on shells of the battery cells to release internal pressure of the battery cells, such that once the internal pressure or temperature of the battery cells reaches a threshold, the pressure relief mechanisms can be driven to release the pressure in the battery cells. However, existing pressure relief mechanisms of the battery cells may be prematurely activate to release pressure during use, resulting in poor stability of the battery cells, which is unfavorable for prolonging the service life and improving the reliability of the battery cells. The above are solely to offer background technical information related to the present application and do not necessarily constitute existing technologies.

### SUMMARY OF THE INVENTION

The main technical problem to be solved in the present application is to provide a battery cell, a battery, and an electrical device; gas in the battery cell in a sealed state can be exhausted through a gas permeable membrane, and the gas in a battery shell is timely exhausted to the outside, thus avoiding excessive pressure in the battery shell, reducing the risk of premature activation of a pressure relief mechanism, and significantly prolonging the service life of the battery cell.

To solve the above technical problem, one technical solution is adopted by the present application as that: the battery cell is provided and includes a shell and a gas permeable membrane assembly; the shell has a wall portion, and the wall portion is provided with a first exhaust vent which communicates the interior with the exterior of the shell; the gas permeable membrane assembly is arranged on the wall portion and includes a gas permeable membrane; and the gas permeable membrane assembly covers the first exhaust vent. By means of such arrangement, the battery cell in a sealed state can discharge internal gas through the gas permeable membrane, and the gas in the battery shell is timely discharged to the outside, thus avoiding excessive pressure in the battery shell, reducing the risk of premature activation of a pressure relief mechanism, and significantly prolonging the service life of the battery cell.

In one embodiment, the battery cell further includes a sealing member which is arranged between the gas permeable membrane assembly and the wall portion. By means of such arrangement, the seal between the gas permeable membrane assembly and the wall portion can be enhanced, thereby preventing external moisture, oxygen, and other substances from entering the battery cell.

In one embodiment, the sealing member is arranged between the gas permeable membrane and the wall portion. By means of such arrangement, the seal between the gas permeable membrane and the wall portion can be enhanced, the gas can be discharged through the gas permeable membrane while external moisture, oxygen, and other substances are prevented from entering the battery cell.

In one embodiment, the sealing member is arranged around the first exhaust vent; the sealing member is provided a second permeable hole, and the hole size of the second permeable hole is larger than that of the first exhaust vent; and the gas permeable membrane covers the second permeable hole. By means of such arrangement, the gas discharged through the first exhaust vent is limited in a space enclosed by the sealing member between the wall portion and the gas permeable membrane, such that the gas can be continuously discharged through the gas permeable membrane. Moreover, the seal around the first exhaust vent can be achieved, and external moisture can be prevented from entering the battery cell through the first permeable hole.

In one embodiment, the gas permeable membrane assembly further includes a connector which is provided with the first permeable hole, the gas permeable membrane is arranged on the connector and covers the first permeable hole; and the gas permeable membrane is arranged between the connector and the sealing member. By means of such arrangement, the connector can be utilized to fix the sealing member.

In one embodiment, the wall portion includes a first recessed platform and a second recessed platform which are recessed relative to a surface of the wall portion; the first recessed platform is arranged around the second recessed platform and is closer to the surface of the wall portion than the second recessed platform; the second recessed platform is arranged around the first exhaust vent; at least part of the sealing member is located on the second recessed platform; and at least part of the gas permeable membrane assembly is located on the first recessed platform. By means of such arrangement, a mounting height of the gas permeable membrane assembly can be reduced, and the space utilization rate is increased.

In one embodiment, the second recessed platform includes a platform surface, and the second recessed platform is also provided with a first boss protruding from the platform surface; and the first boss is spaced from the gas permeable membrane. By means of such arrangement, the risk of damage to the gas permeable membrane can be reduced.

In one embodiment, the first boss is an annular boss surrounding the first exhaust vent. By means of such arrangement, the sealing member can be effectively positioned, thus reducing the mounting difficulty.

In one embodiment, a plurality of first bosses are provided and are arranged at intervals in a circumferential direction of the first exhaust vent. By means of such arrangement, the process can be simplified while achieving positioning.

In one embodiment, the connector is welded to the wall portion. By means of such arrangement, the stability of the connection between the gas permeable membrane assembly and the wall portion can be enhanced.

In one embodiment, the connector is in interference fit with the wall portion. By means of such arrangement, the processing can be simplified.

In one embodiment, the wall portion is provided with the first recessed platform that is recessed relative to the wall portion, the first recessed platform is arranged around the first exhaust vent, and at least part of the gas permeable membrane assembly is located on the first recessed platform. By means of such arrangement, the mounting depth of the gas permeable membrane assembly can be reduced, thus improving the space utilization rate.

In one embodiment, the wall portion includes an outer surface and an inner surface which are arranged opposite each other, the outer surface is arranged toward the exterior of the shell, the inner surface is arranged toward the interior of the shell; and the wall portion is provided with the first recessed platform that is recessed relative to the inner surface of the wall portion. By means of such arrangement, the mounting height of the gas permeable membrane assembly can be reduced, and the space utilization rate is increased.

In one embodiment, the wall portion is further provided with a third recessed platform that is recessed relative to the inner surface of the wall portion, the first recessed platform is arranged around the third recessed platform and is closer to the inner surface of the wall portion than the third recessed platform; and the third recessed platform is arranged around the first exhaust vent. By means of such arrangement, a region with the third recessed platform is a cavity which is conducive to gas exhaust.

In one embodiment, the gas permeable membrane assembly further includes a connector which is arranged on the first recessed platform, and the connector is provided with the first permeable hole; the gas permeable membrane is arranged on the side of the connector facing the interior of the shell and covers the first permeable hole; or the gas permeable membrane is arranged on the side of the connector facing the wall portion and covers the first permeable hole. By means of such arrangement, it is conducive to gas exhaust.

In one embodiment, an orthogonal projection of the first permeable hole on the wall portion does not overlap with the region where the first exhaust vent is located. By means of such arrangement, external impurities are prevented from entering the gas permeable membrane assembly through the first exhaust vent.

In one embodiment, the gas permeable membrane assembly is arranged on the side of the wall portion facing the interior of the shell. By means of such arrangement, the sealing performance of the battery cell can be improved.

In one embodiment, the gas permeable membrane assembly is arranged on the side of the wall portion facing the exterior of the shell. By means of such arrangement, the gas permeable membrane assembly can be conveniently assembled.

In one embodiment, the wall portion is provided with an outer surface and an inner surface which are arranged opposite each other, the outer surface is arranged toward the exterior of the shell, the inner surface is arranged toward the interior of the shell; the wall portion is provided with a first recessed platform that is recessed relative to the outer surface, and at least part of the gas permeable membrane assembly is located inside the first recessed platform. By means of such arrangement, the mounting height of the gas permeable membrane assembly can be reduced.

In one embodiment, the gas permeable membrane assembly further includes a connector which is arranged on the first recessed platform, and the connector is provided with the first permeable hole; and the gas permeable membrane is arranged on the side of the connector facing the wall portion and covers the first permeable hole. By means of such arrangement, it is conducive to gas exhaust.

In one embodiment, the wall portion includes a wall portion body; the wall portion body has an outer surface and an inner surface which are arranged opposite each other, the outer surface is arranged toward the exterior of the shell, the inner surface is arranged toward the interior of the shell; the wall portion is provided with a wall portion boss that protrudes relative to the inner surface; and the orthogonal projection of the wall portion boss on the wall portion body at least partially overlaps with the orthogonal projection of the gas permeable membrane assembly on the wall portion body. By means of such arrangement, the strength of the wall portion in the region with the gas permeable membrane assembly can be improved.

In one embodiment, the battery cell further includes an insulating element which is arranged on the side of the wall portion facing the interior of the shell; the insulating member is provided with a second exhaust vent that penetrates through the insulating member, and the second exhaust vent is in communication with the first exhaust vent. By means of such arrangement, the contact between the wall portion and electrode assemblies can be blocked, thereby reducing the risk of short circuits.

In one embodiment, the insulating member is provided with a second boss that is protruded from the insulating member; and the second boss is arranged around the second exhaust vent and extends toward the wall portion into the first exhaust vent. By means of such arrangement, the contact between the wall portion at a through hole and the electrode assemblies and other components can be avoided, thereby reducing the risk of short circuits.

In one embodiment, the second boss is spaced from the gas permeable membrane. By means of such arrangement, the risk of damage to the gas permeable membrane assembly can be reduced.

In one embodiment, the insulating member has an upper surface which is arranged toward the wall portion; the insulating member is provided with a sixth recessed platform that is recessed relative to the upper surface, the wall portion is provided with a wall portion boss protruding relative to the inner surface of the wall portion, and at least part of the wall portion boss is located on the sixth recessed platform. By means of such arrangement, the space utilization rate can be increased.

In one embodiment, the battery cell further includes an adapter plate which has a first surface arranged toward the insulating member; the adapter plate is provided with a seventh recessed platform that is recessed relative to the first surface, and the insulating member has a main body boss protruding relative to the lower surface of the insulating member, with at least part of the main body boss located on the seventh recessed platform. By means of such arrangement, the space utilization rate can be increased.

In one embodiment, the battery cell further includes a shielding member which is mounted on the wall portion; the shielding member is located on the side of the wall portion facing the exterior of the shell and shields the gas permeable membrane assembly; and a first discharge channel is formed between the shielding member and the wall portion and communicates a gas outlet of the gas permeable membrane assembly with the exterior of the battery cell. By means of such arrangement, the gas permeable membrane assembly can be protected, and dust, particles, particles and the like in the external environment are prevented from entering the gas permeable membrane assembly.

In one embodiment, the wall portion has the outer surface and the inner surface which are arranged opposite each other, the outer surface is arranged toward the exterior of the shell, and the inner surface is arranged toward the interior of the shell; the wall portion is provided with a fourth recessed platform that is recessed relative to the outer surface of the wall portion; the fourth recessed platform is arranged around the first recessed platform and is closer to the outer surface of the wall portion than the first recessed platform; at least part of the gas permeable membrane assembly is arranged on the first recessed platform; and at least part of the shielding member is arranged on the fourth recessed platform. By means of such arrangement, the mounting height of the shielding member and the gas permeable membrane assembly can be reduced.

In one embodiment, the wall portion is further provided with a fifth recessed platform that is recessed relative to the outer surface of the wall portion, the fourth recessed platform is arranged around the fifth recessed platform, and the fifth recessed platform is located between the fourth recessed platform and first recessed platform. By means of such arrangement, a cavity is formed between the gas permeable membrane assembly and the shielding member, thus facilitating the regulation of gas exhaust.

In one embodiment, the first discharge channel includes a first exhaust gap, and the first exhaust gap is formed between the shielding member and a side surface of the fourth recessed platform and is configured to communicate the gas outlet with the exterior of the shell. By means of such arrangement, it is conducive to gas exhaust.

In one embodiment, the first discharge channel further includes a second exhaust gap, and the second exhaust gap is formed between the shielding member and a bottom surface of the fourth recessed platform and communicates the first exhaust gap with the gas outlet. By means of such arrangement, it is conducive to gas exhaust.

In one embodiment, the battery cell further includes a protective patch, and the protective patch is arranged on the side of the wall portion facing the exterior of the shell and covers the shielding member. By means of such arrangement, the shielding member can be protected, and the appearance of the battery cell can be kept unchanged.

In one embodiment, the protective patch is provided with an information collection hole penetrating the protective patch, an orthographic projection of the information collection hole on the wall portion is in the shielding member. A region exposed by the information collection hole is the surface of the shielding member, thus facilitating the setting of information codes or the connection of detection elements for sampling on the shielding member.

In one embodiment, the battery cell further includes the protective patch, and the protective patch is arranged on the side of the wall portion facing the exterior of the shell and covers the first permeable hole. By means of such arrangement, dust, particles, and the like in the external environmental can be prevented from entering the first permeable hole, thus reducing the risk of blockage in the discharge channel and ensuring smooth exhaust.

In one embodiment, the side of the protective patch facing the wall portion is provided with an adhesive layer, and the adhesive layer adheres the protective patch to the wall portion; the adhesive layer is provided with an avoidance groove, and the avoidance groove forms a second discharge channel with the wall portion. By means of such arrangement, the connection strength between the protective patch and the wall portion can be enhanced while an exhaust space is reserved.

In one embodiment, the gas permeable membrane assembly further includes a connector which is provided with a first permeable hole, the gas permeable membrane is arranged on the connector and covers the first permeable hole. The connection strength between the gas permeable membrane assembly and the wall portion can be enhanced while the probability of deformation of the gas permeable membrane is reduced.

In one embodiment, the connector is provided with a first annular recessed platform recessed relative to the surface of the connector, the first annular recessed platform is arranged around the first permeable hole, and the gas permeable membrane is arranged on the first annular recessed platform. By means of such arrangement, the overall height of the gas permeable membrane assembly can be reduced.

In one embodiment, the gas permeable membrane assembly further includes a backing member which is arranged between the gas permeable membrane and the connector; and a gas permeability of the backing member is greater than that of the gas permeable membrane. By means of such arrangement, a support is provided to the gas permeable membrane to protecting it from significant deformation.

In one embodiment, the connector is further provided with a second annular recessed platform recessed relative to the surface of the connector, the second annular recessed platform is arranged around the first permeable hole, and at least part of the backing member is arranged on the second annular recessed platform. The overall height of the gas permeable membrane assembly can be reduced.

In one embodiment, an area of a groove where the second annular recessed platform is located is 30mm²-250mm², optionally, 60mm²-200mm². Therefore, the gas permeability of the gas permeable membrane assembly can be improved while the amount of external water vapor entering the interior of the battery cell can be reduced.

In one embodiment, the first permeable hole includes a plurality of circular through holes, and a diameter of the circular through holes is less than 3.0 mm. A support can be provided to the gas permeable membrane to protect it from significant deformation.

In one embodiment, a thickness of the gas permeable membrane is 0.1-3.0 mm, optionally, 0.2-0.8 mm. The gas permeability and strength of the gas permeable membrane can be balanced.

In one embodiment, the connector is a metal member. The connection strength between the gas permeable membrane assembly and the wall portion can be improved.

In one embodiment, a gas permeability rate of the gas permeable membrane is 3-10 mL/day, optionally, 4-6 mL/day. The gases from the battery cell can be timely exhausted, thereby maintaining the internal pressure balance of the battery.

In one embodiment, the shell includes a case and an end cover: an accommodating chamber with an opening is formed in the case and is configured to accommodate the electrode assemblies; the opening is closed by the end cover; the end cover serves as the wall portion; or the case includes the wall portion; or the wall portion is a wall of the battery cell on the top of the shell when in a placed state. It is conducive to timely exhausting gas.

In one embodiment, the battery cell further includes a pressure relief mechanism; and the pressure relief mechanism is arranged in the shell and is configured to be actuated to release the internal pressure of the battery cell in the event of thermal runaway of the battery cell.

In order to solve the above technical problems, another technical solution is adopted in the present application as that: the battery is provided and includes the abovementioned battery cell. The battery has at least the same advantages as the battery cell.

In order to solve the above technical problems, another technical solution is adopted in the present application as that: the electrical device is provided and includes the abovementioned battery. The electrical device has at least the same advantages as the battery.

The above description is only an overview of the technical solution of the present application, and in order to be able to understand more clearly the technical means of the present application, it can be implemented in accordance with the contents of the description, and in order to make the above and other purposes, characteristics and advantages of the present application more obvious and easy to understand, the specific embodiments of the present application are listed below.

### BRIEF DESCRIPTION OF THE DRAWINGS

In order to describe the technical solution in the embodiments of the present application more clearly, the accompanying drawings needed in the description of the embodiments will be briefly introduced below; obviously, the accompanying drawings in the following description only refer to some embodiments of the present application; and for those of ordinary skill in the art, other drawings can be obtained according to these accompanying drawings without creative work.
FIG. 1 is an exploded schematic structural diagram of a battery cell according to one or more embodiments;
FIG. 2 is a partially exploded schematic structural diagram of a battery cell according to one or more embodiments;
FIG. 3 is a cross-sectional schematic diagram of a gas permeable membrane assembly according to one or more embodiments;
FIG. 4 is a cross-sectional schematic diagram of a gas permeable membrane assembly according to one or more embodiments;
FIG. 5 is a partial cross-sectional schematic diagram of a battery cell according to one or more embodiments;
FIG. 6 is a partial cross-sectional schematic diagram of a battery cell according to one or more embodiments;
FIG. 7 is a partial cross-sectional schematic diagram of a battery cell according to one or more embodiments;
FIG. 8 is a partial cross-sectional schematic diagram of a battery cell according to one or more embodiments;
FIG. 9 is a partially exploded schematic structural diagram of a battery cell according to one or more embodiments;
FIG. 10 is an enlarged schematic diagram of A in FIG. 9;
FIG. 11 is a partial cross-sectional schematic diagram of an end cover according to one or more embodiments;
FIG. 12 is a partially exploded schematic structural diagram of a battery cell according to one or more embodiments;
FIG. 13 is a partial cross-sectional schematic diagram of a battery cell according to one or more embodiments;
FIG. 14 is a partially exploded schematic structural diagram of a battery cell according to one or more embodiments;
FIG. 15 is a partial cross-sectional schematic diagram of an insulating member according to one or more embodiments;
FIG. 16a is a partial cross-sectional schematic diagram of a battery cell according to one or more embodiments;
FIG. 16b is a partial cross-sectional schematic diagram of a battery cell according to one or more embodiments;
FIG. 17a is an exploded schematic structural diagram of a battery cell according to one or more embodiments;
FIG. 17b is a bottom view of an adhesive layer of a protective patch according to one or more embodiments;
FIG. 18 is an exploded schematic structural diagram of a battery according to one or more embodiments; and
FIG. 19 is a schematic structural diagram of a vehicle according to one or more embodiments.

In the figures:
1000, vehicle; 300, motor; 200, controller; 100, battery; 10, box; 11, first portion; 12, second portion; 20, battery cell; 21, end cover; 21a, outer surface; 21b, inner surface; 211, first boss; 212, wall portion boss; 291, first exhaust vent; 22, case; 23, electrode assembly; 24, insulating member; 241, second boss; 242, main body portion; 242a, upper surface; 2421, main body boss; 292, second exhaust vent; 25, electrode terminal; 26, adapter plate; 26a, first surface; 40, gas permeable membrane assembly; 41, gas permeable membrane; 42, metal member; 491, first permeable hole; 43, backing member; 44, sealing member; 492, second permeable hole; 50, shielding member; 501, first exhaust gap; 60, protective patch; 601, information collection hole; 602, first avoidance hole; 603, second avoidance hole; 610, adhesive layer; 611, avoidance groove; 70, pressure relief mechanism;
T1, first annular recessed platform; T2, second annular recessed platform; T3, transition surface;
S1, first recessed platform; S11, bearing surface; S12, connection surface; S2, second recessed platform; S22, platform surface; C1, first transition connection surface; S3, third recessed platform; C2, second transition connection surface; S4, fourth recessed platform; S42, connection surface; S5, fifth recessed platform; C3, third transition connection surface; C4, fourth transition connection surface; S6, sixth recessed platform; S7, seventh recessed platform; and W1, weld joint.

### DETAILED DESCRIPTION

In order to make the objectives, technical solutions and advantages of the present application clearer, the embodiments of the technical solutions of the present application will be described in detail below with reference to the accompanying drawings. The following embodiments are only used to more clearly illustrate the technical solutions of the present application, and therefore are only used as examples and cannot be used to limit the scope of protection of the present application.

Unless otherwise defined, all technical and scientific terms used herein have the same meanings as those commonly understood by those skilled in the art of the present application. The terms used herein are intended only for the purpose of describing specific embodiments and are not intended to limit the present application. The terms "including" and "having" and any variations thereof in the specification and claims of the present application and in the description of the aforementioned accompanying drawings are intended to cover non-exclusive inclusion.

In the descriptions of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the descriptions of the embodiments of the present application, the term "a plurality of" refers to two or more (including two), and similarly, "a plurality of groups" refers to two or more (including two) groups, and "a plurality of sheets" refers to two or more (including two) sheets, unless otherwise specifically limited.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiment of the present application, the term "and/or" is merely an association relationship that describes the associated object, indicating that there can be three kinds of relationships, such as A and/or B, which can be denoted as: the existence of A alone, the existence of A and B at the same time, and the existence of B alone. In addition, the character "/" herein generally means that the associated objects before and after it are in an "or" relationship.

Quantity, ratio, and other numerical values are presented in a range format here. It is to be understood that this type of range format is used for convenience and simplicity, and is to be interpreted flexibly, not only including values explicitly designated as range limits but also covering all individual values or sub-ranges within the range, as if each value and sub-range are explicitly specified.

In the description of the embodiments of the present application, the same reference numerals indicate the same components, and for the sake of conciseness, detailed descriptions of the same components are omitted in different embodiments. It is to be understood that the thickness, length, width and other dimensions of various components in the embodiments of the present application shown in the accompanying drawings, as well as the overall thickness, length, width and other dimensions of an integrated apparatus, are for illustrative purposes only, and should not constitute any limitation to the present application.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like which indicate the orientation or positional relationship are based on the orientation or positional relationship shown in the accompanying drawing, and are only for the convenience of describing the embodiments of the present application and simplifying the description, and do not indicate or imply that the device or element referred to must have a specific orientation, be constructed and operated in a specific orientation, and therefore cannot be construed as a restriction on the embodiments of the present application.

In the description of the embodiments of the present application, unless otherwise expressly specified or limited, the technical terms "mounted", "linked", "connected", "fixed" and other terms shall be understood broadly, for example, they may be fixed, detachable, or integral, or mechanically or electrically connected, or directly linked, or indirectly linked through an intermediate medium, and may be communicated internally or interacted between two elements. For those of ordinary skill in the art, the specific meaning of the above terms in the present application may be understood on a case-by-case basis.

Batteries are widely used in the field of new energy, mainly including electric vehicles, energy storage systems, and renewable energy. In the field of electric vehicles, higher performance such as longer endurance mileage and fast charging has gradually been achieved. In terms of energy storage systems, the batteries are widely used for large-scale and distributed energy storage, they can balance network loads, store solar, wind energy and other renewable energy sources, and release the stored energy during peak periods. In addition, small rechargeable batteries are also widely used in applications such as wearable devices, drones, and smart homes.

During the charge-discharge processes of the batteries, gas will be generated due to some side reactions, and if the gas generated by the batteries cannot be exhausted in time, it will lead to an increase in internal pressure of the batteries, and excessive internal pressure will negatively affect the battery performance and appearance. For example, in severe cases, it may cause destructive effects on the battery performance and appearance, such as leakage, swelling, increased internal resistance of the battery, shorter discharge time, and reduced cycle life. Moreover, there are some abnormal operations during battery use, including overcharging, over-discharging, and internal faults; in such cases, internal chemical reactions in the batteries may be uncontrolled, accompanied by violent gas release, and may even cause thermal runaway. The thermal runaway of the batteries refers to a chain reaction phenomenon caused by various triggers, and a large amount of heat and harmful gases released during thermal runaway will cause the battery to catch fire or explode.

In order to ensure the use safety of battery cells, pressure relief mechanisms are usually arranged on shells of the battery shells to release the internal pressure of the battery cells, thereby effectively enhancing the use safety of the battery cells. However, during the use of the battery cells, unstable internal pressure may cause the pressure-relief mechanism to be prematurely activated to release pressure, resulting in poor use stability of the battery cells, which is not conducive to prolonging the service life and improving the reliability of the battery cells.

Based on the above, an embodiment of the present application provides a battery cell, and a gas permeable membrane assembly is arranged on the battery cell; a gas permeability of a gas permeable membrane in the gas permeable membrane assembly is utilized to exhaust the gas in the battery cell in time, so as to maintain stable internal pressure.

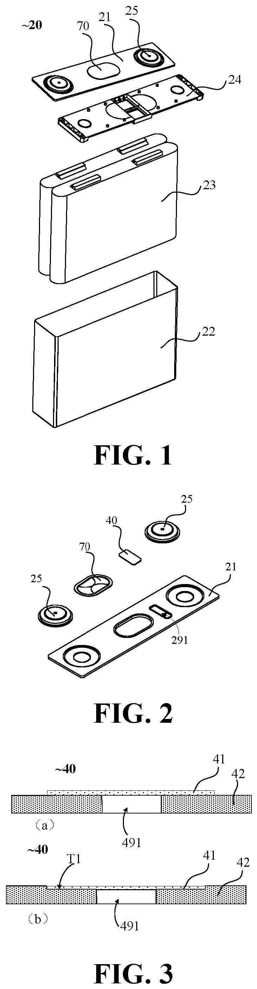

With reference to FIG. 1, FIG. 1 is an exploded schematic structural diagram of a battery cell 20 according to one or more embodiments. The battery cell 20 is the minimum unit forming the battery 100. As shown in FIG. 1, the battery cell 20 includes an end cover 21, a case 22, an electrode assembly 23 and other functional components.

The end cover 21 refers to a component which covers an opening of the case 22 to isolate an internal environment of the battery cell 20 from an external environment. Without limitation, the shape of the end cover 21 may match the shape of the case 22 so as to fit the case 22. Optionally, the end cover 21 can be made of a material (such as aluminum alloy) with certain hardness and strength, so that the end cover 21 is not easy to deform when being extruded and collided, the battery cell 20 can have higher structural strength, and the safety performance can be improved. The end cover 21 may be provided with functional components such as an electrode terminal 25. The electrode terminal 25 can be electrically connected to the electrode assembly 23 to output or input the electric energy of the battery cell 20. By way of example, the battery cell 20 is provided with two electrode terminals 25 which are mounted on the end cap 21; the two electrode terminals 25 are respectively electrically connected to two electrode tabs having opposite polarity of the electrode assembly 23, so as to form a positive electrode and a negative electrode for achieving output or input of the battery cell 20 respectively. In some optional embodiments, the end cover 21 is further provided with a pressure relief mechanism 70 that is configured to relieve the internal pressure when the internal pressure or temperature of the battery cell 20 reaches a threshold. There may be many kinds of materials of the casing 21, such as copper, iron, aluminum, stainless steel, aluminum alloy, and plastic, which is not specifically limited in the embodiment of the present application. In some embodiments, an insulating member 24 can also be arranged on the inner side of the end cover 21, and the insulating member can 24 be configured to isolate an electric connection part in the case 22 from the end cover 21, so that the risk of short circuit is reduced. By way of example, the insulating member 24 can be made of plastic, rubber and the like.

The case 22 is an assembly matched with the end cover 21 to form the internal environment of the battery cell 20, in which, the formed internal environment can be used for accommodating the electrode assembly 23, the electrolyte and other components. The shell 22 and the end cover 21 may be separate components, an opening may be formed in the shell 22, and at the opening, the opening is covered with the end cover 21 so as to form the internal environment of the battery cell 20. Without limitation, the end cover 21 and the case 22 may also be integrated. Specifically, the end cover 21 and the case 22 may form a common connection surface before other components enter the case. When the interior of the case 22 is required to be encapsulated, the end cover 21 is enabled to cover the case 22. The case 22 may be in various shapes and sizes, such as a cuboid, a cylinder, or a hexagonal prism. Specifically, the shape of the case 22 may be determined according to the specific shape and size of the electrode assembly 23. The case 22 may be made of various materials, such as copper, iron, aluminum, stainless steel, an aluminum alloy, and plastic, which is not particularly limited in this embodiment of the present application.

The electrode assembly 23 is a component in the battery cell 20 where an electrochemical reaction occurs. One or more electrode assemblies 23 may be contained within the case 22. The electrode assembly 23 is mainly formed by winding or stacking a positive electrode plate and a negative electrode plate, and a separator is usually arranged between the positive electrode plate and the negative electrode plate. The portions, with active materials, of the positive electrode plate and the negative electrode plate constitute a main body part of the electrode assembly 23, and the portions, without the active materials, of the positive electrode plate and the negative electrode plate respectively constitute tabs. A positive electrode tab and a negative electrode tab can be jointly located at one end of the main body part or respectively positioned at two ends of the main body part. In the charge-discharge process of the battery 100, a positive electrode active material and a negative electrode active material react with an electrolyte solution, and the electrode tabs are connected to the electrode terminal 25 to form a current loop.

According to some embodiments of the present application, the present discloses a battery cell 20 which includes a shell and a gas permeable membrane assembly 40; the shell has a wall portion, and the wall portion is provided with a first exhaust vent which communicates the interior with the exterior of the shell; the gas permeable membrane assembly 40 is arranged on the wall portion and includes a gas permeable membrane 41; and the gas permeable membrane assembly 40 covers the first exhaust vent.

The shell includes an end cover 21 and a case 22, and the wall portion can be either the end cover 21 or a wall of the case 22. That is, the gas permeable membrane assembly 40 can be arranged on the end cover 21 or on the case 22. The solutions of the present application will be described below with the wall portion being the wall of the end cover 21 as an example, but it is not to limit the present application.

With reference to FIG. 2, FIG. 2 is a partially exploded schematic structural diagram of a battery cell 20 according to one or more embodiments. According to some embodiments of the present application, the battery cell 20 includes the end cover 21 and the gas permeable membrane assembly 40; the end cover 21 is provided with a first exhaust vent 291, and the gas permeable membrane assembly 40 is arranged on the end cover 21 and covers the first exhaust vent 291. The first exhaust vent 291 communicates the interior with the exterior of the shell, and gas in the shell of the battery cell 20 can be exhausted through the first exhaust vent 291, thereby regulating the pressure inside the shell of the battery cell 20. The first exhaust vents can be arranged at any position on the end cover 21, one or more first exhaust vents can be provided, and the hole sizes of the first exhaust vents can be set as needed; the size and number of the exhaust vents can be designed based on the capacity of the battery cell 20, the type of battery 100, the size, the amount of gas produced, and the gas production speed. For example, the first exhaust vents can also be mounted on any wall of the case 22.

The gas permeable membrane assembly 40 includes a gas permeable membrane 41 which is made of breathable material and has good permeability, and gas molecules can pass through the gas permeable membrane. The gas permeable membrane assembly 40 is arranged on the end cover 21, the gas permeable membrane 41 covers the first exhaust vent 291, such that the battery cell 20 in a sealed state can exhaust internal gas through the gas permeable membrane 41, and the gas in the shell of the battery 100 can be exhausted to the exterior of the shell in time, thereby preventing excessive gas pressure in the shell of the battery 100 and reducing the risk of premature activation of the pressure relief mechanism 70, thereby significantly prolonging the service life of the battery 100.

In some embodiments, the gas permeable membrane 41 also has a liquid barrier property for blocking liquid, thus preventing an electrolyte solution from overflow while exhausting gas. Furthermore, the gas permeable membrane 41 can block moisture, dust, and impurities from outside to enter the battery cell 20 through the first exhaust vent 291, thereby protecting the internal environment of the battery cell 20 and effectively improving the reliability of the battery cell 20. The gas permeable membrane 41 also has good weather resistance, chemical corrosion resistance, and structural stability; and for automotive power batteries 100, it also needs to be oleophobic. Therefore, the material of the gas permeable membrane 41 can be selected from polymer materials, such as polytetrafluoroethylene, polypropylene, polyethylene, or polyurethane. In addition, since gas generated in the battery 100 will lead to a rapid increase in internal pressure, the gas permeable membrane 41 needs to have a certain degree of mechanical strength and elasticity.

With reference to FIG. 3, FIG. 3 is a cross-sectional schematic diagram of a gas permeable membrane assembly 40 according to one or more embodiments. According to some embodiments of the present application, the gas permeable membrane assembly 40 further includes a connector 42, that is, the gas permeable membrane assembly 40 includes the gas permeable membrane 41 and the connector 42, and the connector 42 is configured to support the gas permeable membrane 41. Specifically, the connector 42 is provided with a first permeable hole 491, and the gas permeable membrane 41 is arranged on the connector 42 and covers the first permeable hole 491. The gas permeable membrane 41 is configured to allow gas in the battery cell 20 to pass through and be exhausted.

The connector 42 can support the gas permeable membrane 41, thus reducing the risk of excessive deformation of the gas permeable membrane 41. Moreover, the connector 42 can also serve as a medium for connecting the gas permeable membrane assembly 40 to the end cover 21, the gas permeable membrane 41 is connected to the end cover 21 through the connector 42, and thus the stability of the connection is improved. The connector 42 is provided with at least one first permeable hole 491 as a release channel for the gas in the battery 100, so that the gas can pass through the connector 42. The shape of the first permeable hole 491 includes round, square, elliptical, and other geometric shapes; the connector 42 can also be provided with a plurality of first permeable holes 491; and the hole size, shape, and arrangement way of the first permeable holes 491 are not specifically limited here. Optionally, the hole size of the first permeable holes 491 can be less than or equal to that of the first exhaust vent 291.

In one embodiment, the first permeable hole 491 includes a hole.

In one embodiment, the first permeable hole 491 includes a plurality of circular through holes, and the diameter of each circular through hole is less than 3.0 mm.

In one embodiment, the connector 42 may be a metal member 42, a resin member, or the like. The material of metal member 42 can be copper, iron, aluminum, steel, or aluminum alloy, etc. The connector 42 may be of a sheet structure. The metal member 42 is selected as the connector, it facilitates welding and connection between the connector and the wall portion. The solutions of the present application are described below with connector 42 being the metal member 42, but not limited thereto, and it is not to limit the solutions in the present application; and it still applies to connectors made of non-metallic materials.

As shown in FIG. 3(a), the gas permeable membrane 41 can be directly arranged on a surface of the metal member 42. In other embodiments, a recessed platform can also be arranged on the metal member 42.

With reference to FIG. 3(b), according to some embodiments of the present application, the metal member 42 is provided with a first annular recessed platform T1 recessed relative to the surface of the metal member 42; the first annular table T1 is arranged around the first permeable hole 491; and the gas permeable membrane 41 is arranged on the first annular recessed platform T1. By means of such arrangement, the mounting height of the gas permeable membrane assembly 40 can be reduced.

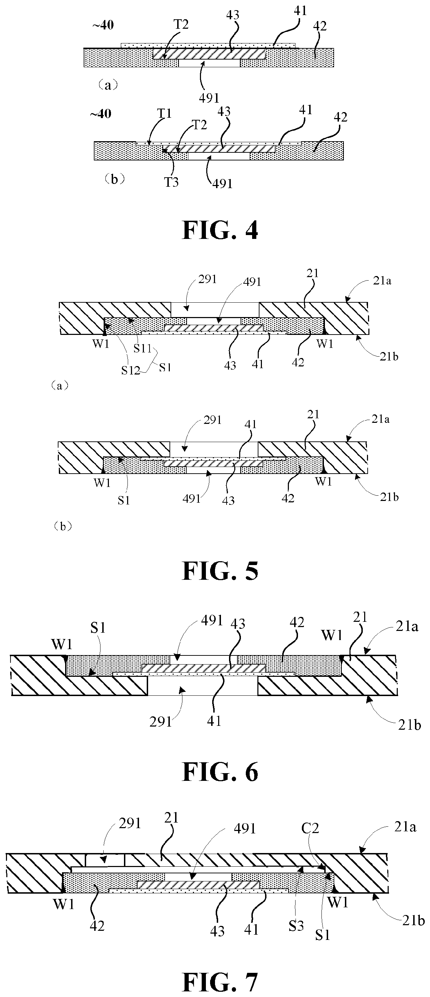

With reference to FIG. 4, FIG. 4 is a cross-sectional schematic diagram of a gas permeable membrane assembly 40 according to one or more embodiments. According to some embodiments of the present application, the gas permeable membrane assembly 40 further includes a backing member 43 which is arranged between the gas permeable membrane 41 and the connector, and the gas permeability rate of the backing member 43 is greater than that of the gas permeable membrane 41.

The gas permeable membrane assembly 40 includes the gas permeable membrane 41, the metal member 42, and the backing member 43; the gas permeable membrane 41 is arranged on the metal member 42; and the backing member 43 is arranged between the gas permeable membrane 41 and the metal member 42 and is configured to support the gas permeable membrane 41 and allows gas passing through the gas permeable membrane 41.

The backing member 43 can support the gas permeable membrane 41 to make it less likely to deform. The backing member 43 is made of a material with better gas permeability than the gas permeable membrane 41, that is, the gas permeability rate of the backing member 43 is greater than that of the gas permeable membrane 41. In order to avoid affecting the permeating process of the gas permeable membrane 41, the backing member 43 also has corrosion resistance and high-temperature resistance. The materials of the backing member 43 are rich, including polypropylene, polyamide, polytetrafluoroethylene, polyperfluoroethylene propylene, and other porous polymers, or metal-organic frame porous materials, as well as carbon film and ceramic porous materials, but these are not limited here.

As shown in FIG. 4(a), the metal member 42 is further provided a second annular recessed platform T2 recessed relative to the surface of the metal member 42; the second annular recessed platform T2 is arranged around the first permeable hole 491; and the backing member 43 is arranged on the second annular recessed platform T2. The second annular recessed platform T2 supports the backing member 43, while the gas permeable membrane 41 can be directly adhered to the surface of the metal member 42. In this method, because the gas permeable membrane 41 is relatively small in thickness, the influence on the overall height of the gas permeable membrane assembly 40 is relatively minor; and by reducing the recessed surface on the metal member 42, the manufacturing process can be simplified, and the strength of the metal member 42 can be improved.

In some embodiments, an area of a groove where the second annular recessed platform T2 is located is 30mm2-250mm2, and optionally, the area of the groove where the second annular recessed platform T2 is located is 60mm2-200mm2. For example, it can be 30 mm2, 50 mm2, 80 mm2, 100 mm2, 120 mm2, 150 mm2, 180 mm2, 200 mm2, 230 mm2, 250 mm2, etc. On one hand, the backing members 43 of different sizes can be accommodated. On the other hand, by controlling the area of the groove where the second annular recessed platform T2 is located within the above range, the gas permeability of the gas permeable membrane assembly 40 can be improved while the amount of external moisture entering the battery cell 20.

As shown in FIG. 4(b), the metal member 42 is provided with the first annular recessed platform T1 and the second annular recessed platform T2 which are recessed relative to the surface of the metal member 42, and a transition surface T3; the first annular recessed platform T1 is arranged around the second annular recessed platform T2, and the transition surface T3 connects the first annular recessed platform T1 to the second annular recessed platform T2; the first annular recessed platform T1 is closer to the surface of the metal member 42 than the second annular recessed platform T2; the second annular recessed platform T2 is arranged around the first permeable hole 491, and the backing member 43 is arranged on the second annular recessed platform T2, and the gas permeable membrane 41 is arranged on the first annular recessed platform T1.

The first annular recessed platform T1 and the second annular recessed platform T2 are formed by recessing inwards the surface of the metal member 42, it can be achieved by stamping the metal member 42 to form the recessed first annular recessed platform T1 and second annular recessed platform T2, or by etching the metal member 42 to remove part of the structure to form the recessed first annular recessed platform T1 and second annular recessed platform T2. Recessed depths of the first annular recessed platform T1 and the second annular recessed platform T2 relative to the surface of the metal member 42 can be set according to the thickness of the gas permeable membrane 41 and the backing member 43. Preferably, the recessed depth of the second annular recessed platform T2 relative to the first annular recessed platform T1 (i.e., a height of the transition surface T3) is equal to the thickness of the backing member 43, such that the second annular recessed platform T2 can accommodate the backing member 43, and the surface of the backing member 43 facing the side of the gas permeable membrane 41 is flush with the first annular recessed platform T1.

In some embodiments, the recessed depth of the first annular recessed platform T1 relative to the surface of the metal member 42 is equal to the thickness of the gas permeable membrane 41, so that the first annular recessed platform can accommodate the gas permeable membrane 41, and the surface of the gas permeable membrane 41 on the side away from the metal member 42 is flush with the surface of the metal member 42.

By arranging the recessed platforms on the metal member 42, the surface of the gas permeable membrane 41 can be flush with the surface of the metal member 42, thus reducing the overall height of the gas permeable membrane assembly 40, and further reducing the mounting height of the gas permeable membrane assembly 40 on the end cover 21.

In one embodiment, the gas permeable membrane 41 is in composite connection with the metal member 42, for example, a nano-injection molding process is utilized to connect the gas permeable membrane 41 with the metal member 42. The nano-injection molding refers to nano molding technology (NMT), and is a technology that combines metal and plastic at the nanoscale. Specifically, after the metal surface is subjected to nanocrystallization treatment, plastic is directly injected and molded on the metal surface, thus the metal and plastic are integrally formed and ultimately combined into a single product. The "nano" here refers to a microporous process, namely, the metal surface is subjected to nano-level microporous treatment with a specific solution, thus enhancing the combination between the metal surface and plastic, and improving the connection strength.

According to some embodiments of the present application, the gas permeable membrane assembly 40 can include only the gas permeable membrane 41, the gas permeable membrane 41 is directly composited with the end cover 21, that is, the gas permeable membrane assembly 40 is arranged on the end cover 21, and the gas permeable membrane 41 is connected to the end cover 21 and covers the first exhaust vent 291. As described above, the end cover 21 can be subjected to with nanocrystallization treatment, and then the gas permeable membrane 41 is compositely connected to the end cover 21. In this embodiment, by means of the gas permeable membrane 41, the battery 100 in the sealed state can exhaust the gas in the battery 100 in time, and can also prevent the electrolyte solution from overflow as well as preventing external moisture from entering, thereby protecting the internal environment of the battery cell 20, and effectively improving the reliability of the battery 100. Moreover, the gas permeable membrane assembly 40 has only one layer of gas permeable membrane 41, which is relatively thin and has little influence on the mounting height of the battery cell 20.

According to some embodiments of the present application, the gas permeable membrane 41 can be attached to the side of the end cover 21 facing the interior of the shell, or attached to the side of the end cover 21 facing the exterior of the shell. The gas permeable membrane 41 can be attached to the surface of the end cover 21, or a recessed platform recessed relative to the end cover 21 can be arranged on the end cover 21 to accommodate the gas permeable membrane 41, thus ensuring that the surface of the gas permeable membrane 41 is flush with the surface of the end cover 21.

According to some embodiments of the present application, the gas permeable membrane assembly 40 includes the gas permeable membrane 41 and the metal member 42; the gas permeable membrane 41 is arranged on the metal member 42, the gas permeable membrane assembly 40 is arranged on the end cover 21, and the metal member 42 is connected to the end cover 21. That is, the gas permeable membrane 41 is connected to the end cover 21 through the metal member 42.

In some embodiments, the metal member 42 can be connected to the end cover 21 by methods such as welding or interference fit. In this way, the connection strength between the gas permeable membrane assembly 40 and the end cover 21 can be enhanced.

With reference to FIG. 5 and FIG. 6, FIG. 5 is a partial cross-sectional schematic diagram of a battery cell 20 according to one or more embodiments; and FIG. 6 is a partial cross-sectional schematic diagram of a battery cell 20 according to one or more embodiments. According to some embodiments of the present application, the end cover 21 is provided with a first recessed platform S1 recessed relative to the surface of the end cover 21, the first recessed platform S1 is arranged around the first exhaust vent 291, and at least part of the gas permeable membrane assembly 40 is arranged on the first recessed platform S1.

The end cover 21 includes an outer surface 21a and an inner surface 21b which are arranged opposite each other, the outer surface 21a is arranged toward the exterior of the shell, and the inner surface 21b is arranged toward the interior of the shell. The gas permeable membrane assembly 40 can be arranged on the side of the end cover 21 facing the interior of the shell, or on the side of the end cover 21 facing the exterior of the shell.

As shown in FIG. 5 (a) and FIG. 5(b), the gas permeable membrane assembly 40 is arranged on the side of the end cover 21 facing the interior of the shell. The wall portion has the outer surface 21a and the inner surface 21b which are arranged opposite each other, the outer surface 21a is arranged toward the exterior of the shell, and the inner surface 21b is arranged toward the interior of the shell; and the wall portion is provided with the first recessed platform recessed relative to the inner surface 21b of the wall portion.

Specifically, the inner surface 21b of the first recessed platform S1 is recessed relative to the end cover 21, and the gas permeable membrane assembly 40 is arranged on the first recessed platform S1. Optionally, the gas permeable membrane assembly 40 can be connected to the end cover 21 through the metal member 42.

The first recessed platform S1 is formed by recessing from the inner surface 21b of the end cover 21 toward the outer surface 21a of the end cover 21. It can be achieved by stamping the end cover 21 to form the recessed first recessed platform S1, or by etching the end cover 21 to remove part of the structure to form the recessed first recessed platform S1. A recessed depth of the first recessed platform S1 relative to the inner surface 21b of the end cover 21 can be set according to the thickness of the gas permeable membrane assembly 40. The thickness of the gas permeable membrane assembly 40 is the overall thickness including the gas permeable membrane 41, the metal member 42, and the backing member 43. As described above, the gas permeable membrane 41 and backing member 43 can be accommodated within the annular recessed platform that is recessed relative to the surface of the metal member 42, that is, the overall thickness of the gas permeable membrane assembly 40 can be equal to the thickness of the metal member 42. Preferably, the recessed depth of the first recessed platform S1 relative to the inner surface 21b of the end cover 21 is equal to the thickness of the gas permeable membrane assembly 40, so that the gas permeable membrane assembly 40 is accommodated in the first recessed platform S1, and the surface of the gas permeable membrane assembly 40 facing the interior of the shell is flush with the inner surface 21b of the end cover 21. In this way, the mounting height of the gas permeable membrane assembly 40 can be reduced, thereby reducing the space occupied in the shell of the battery cell 20 and improving the utilization rate of internal space in the shell.

As shown in FIG. 5(a), the gas permeable membrane 41 can be arranged on the side of the metal member 42 facing the interior of the shell; by means of such arrangement, the influence of the external working environment of the battery cell 20 on the gas permeable membrane 41 can be reduced. As shown in FIG. 5(b), the gas permeable membrane 41 can also be arranged on the side of the metal member 42 facing the end cover 21, that is, the gas permeable membrane 41 is arranged between the metal member 42 and the end cover 21; and by means of such arrangement, the erosion of an electrolyte solution on the gas permeable membrane 41 can be reduced.

As shown in FIG. 6, the gas permeable membrane assembly 40 is arranged on the side of the end cover 21 facing the outer side of the shell. Specifically, the first recessed platform S1 is recessed relative to the outer surface 21a of the end cover 21; and the gas permeable membrane assembly 40 is arranged on the first recessed platform S1 and connected to the end cover 21 through metal member 42. In this embodiment, the first recessed platform S1 is formed by the recessing from the outer surface 21a of the end cover 21 toward the inner surface 21b of the end cover 21. Similarly, the recessed depth of the first recessed platform S1 relative to the outer surface 21a of the end cover 21 can be equal to the thickness of the gas permeable membrane assembly 40.

As shown in FIG. 6, the gas permeable membrane 41 is arranged on the side of the metal member 42 facing the interior of the shell, that is, the gas permeable membrane 41 is arranged between the end cover 21 and the metal member 42. By means of such arrangement, the influence of the external working environment of the battery cell 20 on the gas permeable membrane 41 can be reduced. In other embodiments, the gas permeable membrane 41 can be arranged on the side of the metal component 42 facing the exterior of the shell.

With reference to FIG. 7, FIG. 7 is a partial cross-sectional schematic diagram of a battery cell 20 according to one or more embodiments. According to some embodiments of the present application, the gas permeable membrane assembly 40 is arranged on the side of the end cover 21 facing the interior of the shell, and the gas permeable membrane 41 is arranged on the side of the metal member 42 facing the interior of the shell.

In some embodiments, the wall portion is further provided with a third recessed platform S3 recessed relative to the inner surface 21b of the wall portion; the first recessed platform S1 is arranged around the third recessed platform S3 and is closer to the inner surface 21b than the third recessed platform S3, and the third recessed platform S3 is arranged around the first exhaust vent 491.

The end cover 21 is provided with the first recessed platform S1 and the third recessed platform S3 which are recessed relative to the inner surface 21b of the end cover 21, and a second transition connection surface C2; the first recessed platform S1 is arranged around the third recessed platform S3, the second transition connection surface C2 connects the first and third recessed platforms S1 to the third recessed platform S3, the first recessed platform S1 is closer to the inner surface 21b of the end cover 21 than the third recessed platform S3, the third recessed platform S3 is arranged around the first exhaust vent 291, and the gas permeable membrane assembly 40 is located on the first recessed platform S1; and the gas permeable membrane 41 is arranged on the side of the metal member 42 facing the interior of the shell.

Specifically, the first and third recessed platforms S1 and S3 are formed by the recessing from the inner surface 21b of the end cover 21 toward the outer surface 21a of the end cover 21. The first recessed platform S1 is arranged to support and accommodate the gas permeable membrane assembly 40, and the recessed depth of the first recessed platform S1 relative to the inner surface 21b of the end cover 21 can be set according to the thickness of the gas permeable membrane assembly 40, so as to accommodate the gas permeable membrane assembly 40. The third recessed platform S3 is arranged to form a certain cavity between the gas permeable membrane assembly 40 and the end cover 21, thus allowing gas to be exhausted smoothly. The recessed depth of the third recessed platform S3 relative to the first recessed platform S1 (the height of the second transition connection surface C2) is set as needed.

With reference to FIG. 7, according to some embodiments of the present application, an orthogonal projection of the first permeable hole 491 on the end cover 21 does not overlap with the region where the first exhaust vent 291 is located.

As shown in FIG. 7, the first exhaust vent 291 is not arranged corresponding to the first ventilation hole 491, so that on one hand, it is conducive to regulating gas exhaust; and on the other hand, it reduces the risk of external media entering the first permeable hole 491 to affect the normal operation of the gas permeable membrane 41.

With reference to FIG. 5 and FIG. 6, the metal member 42 can be connected to the end cover 21 by welding. The first recessed platform S1 includes a bearing surface S11 parallel to the end cover 21 surface, and the bearing surface S11 is configured to support the gas permeable membrane assembly 40.

With reference to FIG. 5 and FIG. 6, the metal member 42 can be connected to the end cover 21 by welding. The first recessed platform S1 includes a connection surface S12 perpendicular to the bearing surface S11, and the metal member 42 is a metal sheet having a certain thickness, and the side surface of the metal sheet can be connected to the end cover 21. Specifically, the side of the metal sheet can be welded to the connection surface S12 of the first recessed platform S1, which can be assembled by laser welding; and in FIG. 5 and FIG. 6, W1 is the welding position for both.

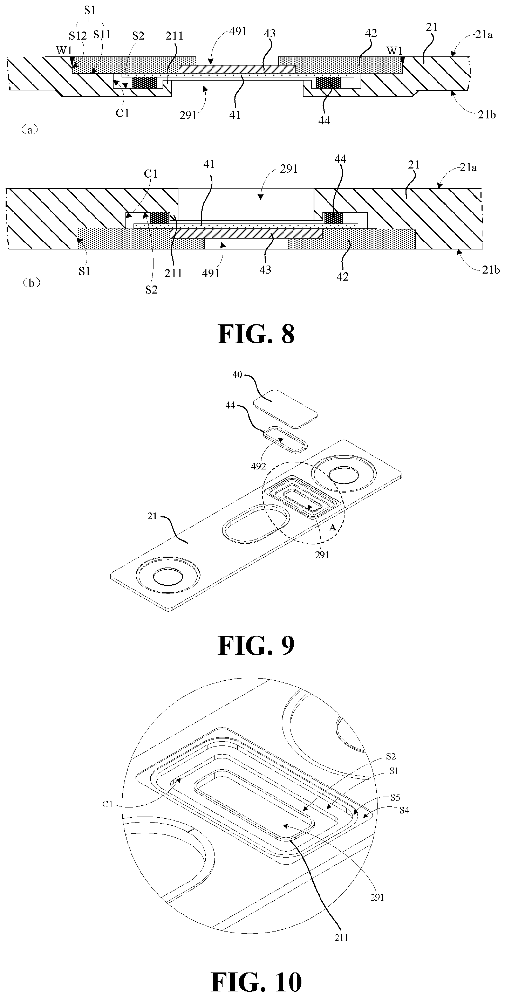

With reference to FIG. 8, FIG. 8 is a partial cross-sectional schematic diagram of a battery cell 20 according to one or more embodiments. According to some embodiments of the present application, the battery cell 20 further includes a sealing member 44 which is arranged between the gas permeable membrane assembly 40 and the end cover 21. The sealing member 44 can maintain the seal between the gas permeable membrane assembly 40 and the end cover 21.

A connection interface between the gas permeable membrane 41 and the metal member 42 is formed by two structures with significantly different properties, so its sealing performance is certainly limited, especially as gas is continuously exhausted, the connection interface between the gas permeable membrane 41 and the metal member 42 is prone to failure, consequently, the sealing performance degrades, and as a result, the gas is exhausted through the connection interface between the gas permeable membrane 41 and the metal member 42, and external moisture easily enters the battery 100 along this path. In some embodiments, the metal member 42 is connected to the end cover 21 by welding, and the sealing performance of the welded interface is limited by the precision of the welding process, which can also easily lead to poor sealing performance. The sealing member 44 is arranged between the gas permeable membrane assembly 40 and the end cover 21, which can achieve the sealing of two sealing interfaces, namely, the seal between the lower surface of the sealing member 44 and the end cover 21, and the seal between the upper surface 242a of the sealing member 44 and the gas permeable membrane assembly 40. The requirements for the connection interface between the gas permeable membrane 41 and the metal member 42, as well as the sealing requirements for a weld joint W1 can be reduced, thereby reducing the process precision and decreasing the manufacturing cost.

With reference to FIG. 8 and FIG. 9, FIG. 9 is a partially exploded schematic structural diagram of a battery cell 20 according to one or more embodiments. According to some embodiments of the present application, the sealing member 44 is arranged between the gas permeable membrane 41 and the wall portion.

The sealing member 44 is arranged between the gas permeable membrane 41 and the end cover 21 to achieve the seal between the gas permeable membrane 41 and the end cover 21, thus the gas can be exhausted through the gas permeable membrane 41 without leaking to other regions. Moreover, it can block external moisture, vapor, oxygen, and other elements from entering the battery 100.

In some embodiments, the sealing member 44 is arranged around the first exhaust vent 291 and is provided with a second permeable hole 492, a hole size of the second permeable hole 492 is greater than that of the first row of ventilation holes 291, and the gas permeable membrane 41 covers the second permeable hole 492. The sealing member 44 is arranged around the first exhaust vent 291, the sealing member 44 can be utilized to limit the gas passing through the first exhaust vent 291 within a space enclosed by the sealing member 44 between the end cover 21 and the gas permeable membrane 41, thereby ensuring that the gas can continue to be exhausted through the gas permeable membrane 41. That is, the sealing member 44 is an annular sealing ring arranged around the first exhaust vent 291. By means of such arrangement, the sealing around the first exhaust vent 291 can be achieved, and external moisture can be prevented from entering the battery 100 through the first exhaust vent 291.

With reference to FIG. 8 and FIG. 9, the gas permeable membrane assembly 40 further includes the connector 42 which is provided with the first permeable hole 491; the gas permeable membrane 41 is arranged on the connector 42 and covers the first permeable hole 491; and the gas permeable membrane 41 is arranged between the connector 42 and the sealing member 44.

Taking the connector 42 being the metal member 42 as an example, the sealing member 44 is arranged between the metal member 42 and the end cover 21, and the gas permeable membrane 41 is arranged between the metal member 42 and the sealing member 44. That is, in a stacking direction, the sealing member 44 is stacked on the end cover 21, the gas permeable membrane 41 is stacked on the sealing member 44, and the metal member 42 is stacked on the gas permeable membrane 41. In this way, the connection between the metal member 42 and the end cover 21 can be utilized to fix the sealing member 44, thereby achieving the seal between the sealing member 44 and the end cover 21, as well as the seal between the sealing member 44 and the gas permeable membrane 41. In other words, the metal member 42 can be utilized to press the sealing member 44 onto the end cover 21, and the pressing force is utilized to combine the sealing member 44 with the end cover 21 and the gas permeable membrane 41, so as to form the sealing interface. The sealing member 44 shown in FIG. 8 is pressed between the gas permeable membrane 41 and the end cover 21; and in other embodiments, the sealing member 44 can also be moved to the left and right sides, so as to be directly pressed between the metal member 42 and the end cover 21.

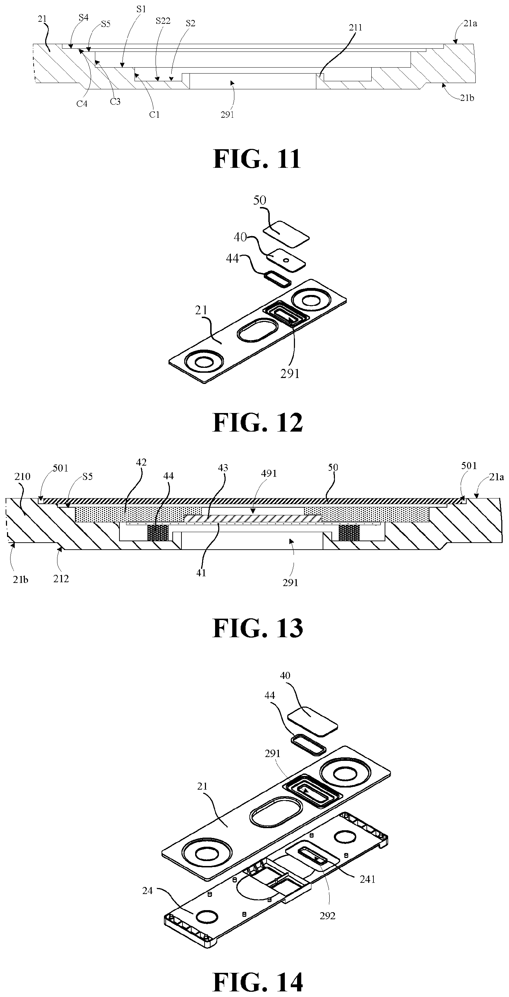

With reference to FIG. 8, FIG. 9, FIG. 10, and FIG. 11, FIG. 10 is an enlarged schematic diagram of A in FIG. 9; and FIG. 11 is a partial cross-sectional schematic diagram of an end cover 21 according to one or more embodiments. According to some embodiments of the present application,
the end cover 21 is provided with the first recessed platform S1 and the second recessed platform S2 which are recessed relative to the surface of the end cover 21; the first recessed platform S1 is arranged around the second docking platform S2, the first recessed platform S1 is closer to the surface of the end cover 21 than the second recessed platform S2, the second recessed platform S2 is arranged around the first exhaust vent 291, the sealing member 44 is located on the second recessed platform S2, and the gas permeable membrane assembly 40 is located on the first recessed platform S1.

The end cover 21 is provided with the first recessed platform S1 and the second recessed platform S2 which are recessed relative to the surface of the end cover 21, and a first transition connection surface C1; the first recessed platform S1 is arranged around the second recessed platform S2, the first transition connection surface C1 connects the first recessed platform S1 to the second recessed platform S2, the first recessed platform S1 is closer to the end cover 21 surface than the second recessed platform S2, the second recessed platform S2 is arranged around the first exhaust vent 291, the sealing member 44 is located on the second recessed platform S2, and the gas permeable membrane assembly 40 is located on the first recessed platform S1.

As described above, the end cover 21 includes the outer surface 21a and the inner surface 21b which are arranged opposite to each other, the outer surface 21a is arranged toward the exterior of the shell, and the inner surface 21b is arranged toward the interior of the shell. The gas permeable membrane assembly 40 can be arranged on the side of the end cover 21 facing the interior of the shell, or on the side of the end cover 21 facing the exterior of the shell.

As shown in FIG. 8(a), the gas permeable membrane assembly 40 is arranged on the side of the end cover 21 facing the exterior of the shell.

The end cover 21 is provided with the first recessed platform S1 recessed relative to the outer surface 21a, and at least part of the gas permeable membrane assembly 40 is located within the first recessed platform S1.

By the above solution, the mounting height of the gas permeable membrane assembly 40 can be reduced.

In some examples, the first recessed platform S1 and the second recessed platform S2 are recessed relative to the outer surface 21a of the end cover 21, that is, the first recessed platform S1 and the second recessed platform S2 are formed by recessing from the outer surface 21a of the end cover 21 toward the inner surface 21b of the end cover 21. Similarly, the recessed depth of the first recessed platform S1 relative to the outer surface 21a of the end cover 21 can be equal to the thickness of the gas permeable membrane assembly 40. As shown in FIG. 8(b), the gas permeable membrane assembly 40 is arranged on the side of the end cover 21 facing the interior of the shell. Specifically, the first recessed platform S1 and the second recessed platform S2 are recessed relative to the inner surface 21b of the end cover 21, that is, the first recessed platform S1 and the second recessed platform S2 are formed by recessing from the inner surface 21b of the end cover 21 toward the outer surface 21a of the end cover 21.

According to some embodiments of the present application, as shown in FIG. 8(a) and FIG. 8(b), the gas permeable membrane assembly 40 is located on the first recessed platform S1, and the sealing member 44 is located on the second recessed platform S2.

The recessed depth of the first recessed platform S1 relative to the surface of the end cover 21 can be set according to the thickness of the gas permeable membrane assembly 40. The thickness of the gas permeable membrane assembly 40 is the overall thickness including the gas permeable membrane 41, the metal member 42, and the backing member 43. As described above, the gas permeable membrane 41 and backing member 43 can be accommodated within the annular recessed platform that is recessed relative to the surface of the metal member 42, that is, the overall thickness of the gas permeable membrane assembly 40 can be equal to the thickness of the metal member 42. Preferably, the accessed depth of the first recessed platform S1 relative to the surface of the end cover 21 is equal to the thickness of the gas permeable membrane assembly 40, so that the gas permeable membrane assembly 40 is accommodated in the first recessed platform S1, and the surface of the gas permeable membrane assembly 40 is flush with the surface of the end cover 21. In this way, the mounting height of the gas permeable membrane assembly 40 can be reduced.

The recessed depth of the second recessed platform S2 relative to the first recessed platform S1 (the height of the first transition connection surface C1) is set according to the thickness of the sealing member 44. The recessed depth of the second recessed platform S2 relative to the first recessed platform S1 can be equal to the thickness of the sealing member 44, so that the second recessed platform S2 can accommodate the sealing member 44. In further embodiments, the recessed depth of the second recessed platform S2 relative to the first recessed platform S1 can be slightly less than the thickness of the seal 44. In this case, during assembling the battery cell 20, the height of a space between the gas permeable membrane assembly 40 and the end cover 21 is slightly less than the thickness of the sealing member 44, thus achieving a compression effect on the sealing member 44, or, achieving interference fit between the sealing member 44, the end cover 21, and the gas permeable membrane assembly 40. By means of such arrangement, the interface between the sealing member 44 and the end cover 21, as well as the interface between the sealing member 44 and the gas permeable membrane assembly 40, can be tightly combined, thereby improving the sealing performance. The sealing member 44 can be made of polymer material with a certain elasticity, and has a certain tendency to rebound after being compressed, thus further enhancing the combination strength between interfaces.

In embodiments, the sealing member 44 can maintain the seal between the gas permeable membrane assembly 40 and the end cover 21, so that due to the connection between the gas permeable membrane assembly 40 and the end cover 21, it only needs to provide sufficient strength for pressing the sealing member 44 without causing the sealing interface of the sealing member 44 to fail, and the connection between the gas permeable membrane assembly 40 and the end cover 21 no longer needs to perform a sealing function.

According to some embodiments of the present application, the gas permeable membrane assembly 40 is connected to the end cover 21 by the metal member 42. The metal member 42 can be welded to the end cover 21. At the moment, the precision requirements for the welding process can be relatively low, as long as the connection strength between the metal member 42 and the end cover 21 is sufficient to press the sealing interface of the sealing member 44 without failure.

The first recessed platform S1 includes the bearing surface S11 parallel to the end cover 21 surface, and the connection surface S12 perpendicular to the bearing surface S11; the metal member 42 is the metal sheet having a certain thickness; and the side surface of the metal sheet is connected to the end cover 21. The W1 in FIG. 7 is the welding position of them. By means of the sealing member 44, the sealing requirements for the weld joint W1 can be reduced.

According to some embodiments of the present application, it can also be an interference fit between the metal member 42 and the end cover 21. Specifically, the first recessed platform S1 is an annular recessed platform; an annular side wall portion of the annular recessed platform is enclosed to form a shell space, and the metal member 42 can be accommodated in the space of the first recessed platform S1, thus the side surface of the metal member 42 is in interference fit with the connection surface S12 of the first recessed platform S1, thereby achieving the connection function.

With reference to FIG. 8, FIG. 9, FIG. 10, and FIG. 11, the second recessed platform includes a platform surface S22, and the second recessed platform S2 is further provided with a first boss 211 protruding from the platform surface S22; and the first boss 211 is spaced from the gas permeable membrane 41. By means of spacing, the risk of damaging the membrane can be reduced.

In some embodiments, a height of the first boss 211 is less than the height of the first transition connection surface C1. By means of the first boss 211, the sealing member 44 can be effectively positioned. By controlling the height of the first boss 211 to be less than the height of the first transition connection surface C1, on the basis of positioning the sealing member 44, the first boss 211 can be prevented from making contact with the gas permeable membrane assembly 40, thus preventing damage to the gas permeable membrane assembly 40.

According to some embodiments of the present application, as shown in FIG. 9, the first boss 211 is an annular boss surrounding the first exhaust vent 291. It can effectively prevent the displacement of the sealing member 44, thus achieving positioning. In other embodiments, the first boss 211 can also be a plurality of discontinuous bosses, and the plurality of first bosses 211 are distributed at intervals in a circumferential direction of the first exhaust vent 291.

With reference to FIG. 12 and FIG. 13, FIG. 12 is a partially exploded schematic structural diagram of a battery cell 20 according to one or more embodiments; and FIG. 13 is a partial cross-sectional schematic diagram of a battery cell 20 according to one or more embodiments. According to some embodiments of the present application, the battery cell 20 further includes a shielding member 50 which is mounted on the end cover 21; and the shielding member 50 is located on the side of the end cover 21 facing the exterior of the shell and shields the gas permeable membrane assembly 40.

In the embodiments, the gas permeable membrane assembly 40 is arranged on the side of the end cover 21 facing the interior of the shell; the shielding member 50 can shield the gas permeable membrane assembly 40, thus providing a certain protection and shielding effect on the gas permeable membrane assembly 40; therefore, on one hand, the wear or damage to the gas permeable membrane assembly 40 in the external environment can be reduced, and the risk of impurities or particles entering the gas permeable membrane assembly 40 from the external environment can be reduced, thereby prolonging the service life of the gas permeable membrane assembly 40; and on the other hand, the gas permeable membrane assembly 40 is shielded with the shielding member 50 to improve the aesthetics of the outer surface 21a of the battery cell 20; and additionally, detection elements and other components can be continuously connected to the side of the shielding member 50 deviating from the gas permeable membrane assembly 40, thereby reducing the interference caused by the region with the gas permeable membrane assembly 40 on the end cover 21 to the connected detection elements and other components.

With reference to FIG. 10, FIG. 11, FIG. 12, and FIG. 13, according to some embodiments of the present application, the end cover 21 includes the outer surface 21a and the inner surface 21b which are arranged opposite each other, the outer surface 21a is arranged toward the exterior of the shell, and the inner surface 21b is arranged toward the interior of the shell; the end cover 21 is provided with the first recessed platform S1 and a fourth recessed platform S4 which are recessed relative to the outer surface 21a of the end cover 21; the fourth recessed platform S4 is arranged to surround the first recessed platform S1 and is closer to the outer surface 21a of the end cover 21 than the first recessed platform S1; at least part of the gas permeable membrane assembly 40 is arranged on the first recessed platform S1; and at least part of the shielding member 50 is arranged on the fourth recessed platform S4.

The recessed depth of the fourth recessed platform S4 relative to the outer surface 21a of the end cover 21 can be set according to the thickness of the shielding member 50. Therefore, the shielding member 50 is accommodated in the fourth recessed platform S4, and the surface of the shielding member 50 is flush with the outer surface 21a of the end cover 21. In this way, on one hand, the space occupied by the shielding member 50 and end cover 21 in the thickness direction of the end cover 21 can be reduced, and the mounting height of the shielding member 50 can be reduced, thus optimizing the size of the battery cell 20; and on the other hand, the fourth recessed platform S4 can provide positioning and limiting function for the shielding member 50, which helps reduce the assembling difficulty of connecting the shielding member 50 to the end cover 21.

With reference to FIG. 10, FIG. 11, FIG. 12, and FIG. 13, according to some embodiments of the present application, the end cover 21 is further provided a fifth recessed platform S5 recessed relative to the outer surface 21a of the end cover 21; the fourth recessed platform S4 is arranged around the fifth recessed platform S5; and the fifth recessed platform S5 is located between the first recessed platform S1 and the fourth recessed platform S4.

Specifically, the end cover 21 is further provided with the fifth docking platform S5 recessed relative to the outer surface 21a of the end cover 21, a third transition connection surface C3, and a fourth transition connection surface C4; the fourth docking platform S4 is arranged around the fifth recessed platform S5, the fifth recessed platform S5 is arranged around the first docking platform S1, the third transition connection surface C3 connects the fifth recessed platform S5 to the first recessed platform S1, and the fourth transition connection surface C4 connects the fifth recessed platform S5 and the fourth recessed platform S4; the fourth docking platform S4 is closer to the outer surface 21a of the end cover 21 than the fifth recessed platform S5.

Specifically, the first recessed platform S1, the fourth recessed platform S4, and the fifth recessed platform S5 are formed by recessing from the outer surface 21a of the end cover 21 toward the inner surface 21b of the end cover 21. The first recessed platform S1 is arranged to bear and accommodate the gas permeable membrane assembly 40, and the recessed depth of the first recessed platform S1 relative to the fifth recessed platform S5 (the height of the third transition connection surface C3) can be set according to the thickness of the gas permeable membrane assembly 40, so as to accommodate the gas permeable membrane assembly 40. The fourth recessed platform S4 is arranged to bear and accommodate the shielding member 50, and the recessed depth of the fourth recessed platform S4 relative to the outer surface 21a of the end cover 21 can be set according to the thickness of the shielding member 50, so as to accommodate the shielding member 50. The fifth recessed platform S5 is to form a certain cavity between the gas permeable membrane assembly 40 and the shielding member 50, thus allowing gas to be exhausted smoothly. The recessed depth of the fifth recessed platform S5 relative to the fourth recessed platform S4 (the height of the fourth transition connection surface C4) is set according to requirements. Moreover, by means of the fifth recessed platform S5, avoidance is provided for a solder mark boss that connects the metal member 42 to the wall portion by welding.

According to some embodiments of the present application, the shielding member 50 can be mounted on the end cover 21 by welding, interference fit, screwing, clamping, or adhering. In order to ensure smooth gas exhausting, a gas exhaust channel is needed to be reserved during assembling the shielding member 50 and end cover 21.

With reference to FIG. 13, a first discharge channel is formed between the shielding member 50 and the end cover 21 and connects a gas outlet of the gas permeable membrane assembly 40 to the exterior of the battery cell 20. The gas outlet of the gas permeable membrane assembly 40 is either the first permeable hole 491 in the connector of the gas permeable membrane assembly 40, or the first exhaust vent in the end cover 21, it specifically depends on the position of the gas permeable membrane assembly 40.

In one embodiment, the first discharge channel includes a first exhaust gap 501, and the first exhaust gap 501 is formed between the shielding member 50 and a side surface of the fourth recessed platform S4 and is configured to communicate the gas outlet with the exterior of the shell.

The first exhaust gap 501 is configured to communicate the gas outlet with the exterior of the shell and can be in direct communication with the gas outlet, for example, at least part of the projection of the first exhaust gap 501 in a thickness direction X of the wall portion is in the first exhaust vent, so that the gas outlet of the gas permeable membrane assembly 40 arranged inside the first exhaust vent can be in direct communication with the first exhaust gap 501; definitely, the first exhaust gap 501 can be in direct communication with the gas outlet, for example, the exhaust channel can further include a second exhaust gap which is formed between the shielding member 50 and the bottom surface of the fourth recessed platform, and the second exhaust gap communicates the first exhaust gap 501 with the gas outlet of the gas permeable membrane assembly 40.

By means of arranging the first exhaust gap 501, the gas exhausted by the gas permeable membrane assembly 40 can be exhausted outside the shell through the first exhaust gap 501; and according to this structure, the battery cell 20 does not need holes in the shielding member 50, thus reducing the processing difficulty and improving the appearance of the battery cell 20.

In one embodiment, the side surface of the shielding member 50 abuts against and is also connected to the side surface of the fourth recessed platform S4; a boss (or groove) can be formed in the side surface of the shielding member 50, so that the first exhaust gap 501 is formed between the side surface of the shielding member 50 and the side surface of the fourth recessed platform.

In one embodiment, the first discharge channel further includes a second exhaust gap (not shown in the figure), and the second exhaust gap is formed between the shielding member 50 and the bottom surface of the fourth recessed platform S4 and communicates the first exhaust gap 501 with the gas outlet.

The shielding member 50 has a second surface facing the end cover 21; a recessed groove can be formed in the second surface, and the second exhaust gap is formed between the surface of one side of the shielding member 50 facing the end cover 21 and the bottom surface of the fourth recessed platform.

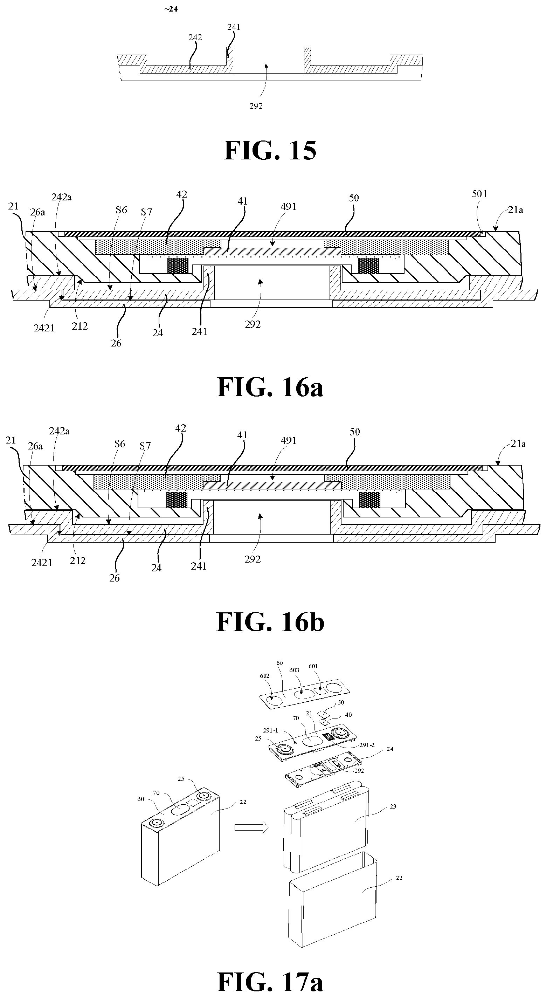

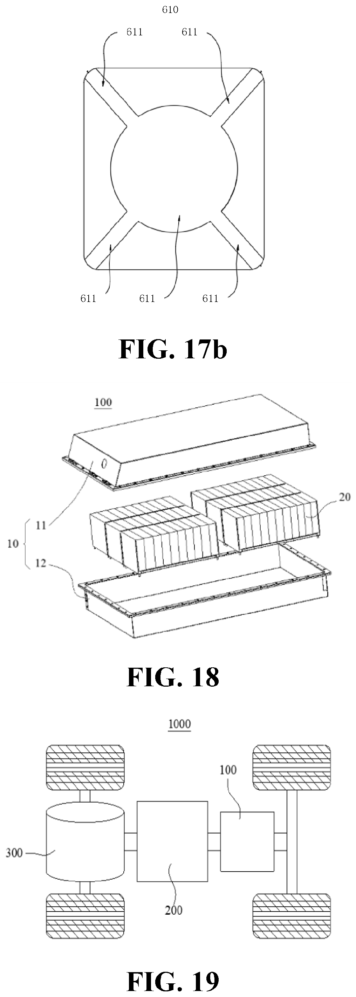

With reference to FIG. 17a and FIG. 17b, FIG. 17a is an exploded schematic structural diagram of a battery cell 20 according to one or more embodiments. According to some embodiments of the present application, the battery cell 20 further includes a protective patch 60 which is arranged on the side of the end cover 21 facing the exterior of the shell. That is, the protective patch 60 is arranged on the outer surface 21a of the end cover 21 to provide certain protection for the end cover 21. The materials of the protective patch 60 can be various, such as rubber, silicone, or plastic.

According to some embodiments of the present application, the protective patch 60 is provided with an information collection hole 601 penetrating through the protective patch 60, and the information collection hole 601 exposes a part of the end cover 21, thus facilitating the setting of information codes or the connection of detection elements for sampling on the end cover 21.

According to some embodiments of the present application, in embodiments that an electrode terminal 25 is arranged on the end cover 21, as shown in FIG. 17a, the protective patch 60 is provided with a first avoidance hole 602 corresponding to the electrode terminal 25; the first avoidance hole 602 penetrates both sides of the protective patch 60 and allows the electrode terminal 25 to pass through, thus providing avoidance for the electrode terminal 25. By way of example, two electrode terminals 25 are arranged on the end cover 21, correspondingly, the protective patch 60 is provided two first avoidance holes 602, each first avoidance hole 602 allowing one electrode terminal 25 to pass through.

In embodiments that a pressure relief mechanism 70 is arranged on the end cover 21, as shown in FIG. 17a, the protective patch 60 is provided with a second avoidance hole 603 corresponding to the pressure relief mechanism 70; the second avoidance hole 603 penetrates both sides of the protective patch 60, and the orthogonal projection of the pressure relief mechanism 70 on the protective patch 60 is within the second avoidance hole 603, so that the second avoidance hole 603 can provide avoidance for the pressure relief mechanism 70.

According to some embodiments of the present application, the gas permeable membrane assembly 40 can be arranged on the side of the end cover 21 facing the interior of the shell, and at the moment, the first exhaust vent 291 will be exposed for the appearance of the end cover 21, such as a first exhaust vent 291-1 in FIG. 17a (the first exhaust vent 291-1 and the exhaust vent 291-2 shown in FIG. 17a are configured to illustrate the difference of the end cover 21 in a condition that the gas permeable membrane assembly 40 is arranged on the side of the end cover 21 facing the interior of the shell and a condition that the gas permeable membrane assembly 40 is arranged on the side of the end cover 21 facing the exterior of the end cover 21, and in actual products, one will be selectively arranged according to the position of the gas permeable membrane assembly 40, definitely, two gas permeable membrane assemblies 40 can be arranged on the battery cell 20, and both can coexist). In this embodiment, the protective patch 60 can be utilized to directly cover the first exhaust vent 291. On one hand, it reduces the risk of impurities or particles from the external environment entering the first exhaust vent 291, thereby preventing poor venting; and on the other hand, it keeps the appearance of the end cover 21 unchanged, thus facilitating expansion to different products without affecting the appearance of the original product.

According to some embodiments of the present application, the gas permeable membrane assembly 40 can be arranged on the side of the end cover 21 facing the exterior of the shell; and at this time, the cover member 50 covering the gas permeable membrane assembly 40 will be exposed in terms of the appearance of the end cover 21.

According to some embodiments of the present application, the orthogonal projection of the information acquisition hole 601 on the end cover 21 is in the masking member 50. That is, the information acquisition hole 601 is arranged corresponding to the shielding member 50, so that a region exposed by the information collection hole 601 is the surface of the shielding member 50, thus facilitating the setting of information codes or the connection of detection elements for sampling on the shielding member 50.

According to some embodiments of the present application, the structure of the protective patch 60 can be arranged on the end cover 21 can be in various ways, and the protective patch 60 can be arranged on the end cover 21 by methods such as adhering or adsorption.

If the adhering method is utilized, the adhesive layer 610 adheres the protective patch 60 to the end cover 21; the adhesive layer 610 is provided with an avoidance groove 611, and a second discharge channel is formed between the avoidance groove 611 and the end cover 21 and communicates the first exhaust vent with the exterior of the battery cell 20.

With reference to FIG. 17b, FIG. 17b is a bottom view of an adhesive layer of a protective patch 60 according to one or more embodiments. The avoidance groove 611 is formed in the adhesive layer 610. In some embodiments, the direct projection of the gas outlet on the protective patch 60 is within the region of the avoidance groove 611.

With reference to FIG. 13, the end cover 21 includes a main body 210 of the end cover 21; the main body 210 of the end cover 21 has the outer surface 21a and the inner surface 21b which are arranged opposite each other, the outer surface 21a is arranged toward the exterior of the shell, and the inner surface 21b is arranged toward the interior of the shell; the end cover 21 is provided with a wall portion boss 212 protruding from the inner surface 21b; and the orthogonal projection of the wall portion boss 212 on the main body of the end cover 21 overlaps at least partially with the orthogonal projection of the gas permeable membrane assembly 40 on the main body of the end cover 21.

Or, in terms of the thickness direction of the end cover 21, the thickness of the end cover 21 in the region with the gas permeable membrane assembly 40 is increased by the wall portion boss 212, thus increasing the strength of the end cover 21 and compensating for the reduction in strength of the end cover 21 caused by the recessed platform.

With reference to FIG. 14, FIG. 15, and FIG. 16a, FIG. 14 is a partially exploded schematic structural diagram of a battery cell 20 according to one or more embodiments; FIG. 15 is a partial cross-sectional schematic diagram of an insulating member 24 according to one or more embodiments; and FIG. 16a is a partial cross-sectional schematic diagram of a battery cell 20 according to one or more embodiments. According to some embodiments of the present application, the battery cell 20 further includes the insulating member 24 which is arranged on the side of the end cover 21 facing the interior of the shell; that is, the insulating member 24 can also be arranged on the inner side of the end cover 21 to isolate an electrical connection components in the case 22 from the end cover 21, thereby reducing the risk of short circuits.

By way of example, the insulating member 24 can be made of plastic, rubber and the like.

The insulating member 24 includes a main body portion 242, and the main body portion 242 is made of a material which cannot make contact with the electrode assembly 23 in the battery 100 to form the short circuit; and the main body portion 242 is configured to protect the end cover 21 from being directly exposed to the electrode assembly 23 in the height direction, thus preventing the electrode assembly 23 from causing a short circuit upon contact.

The insulating member 24 is provided with a second exhaust vent 292 that penetrates the main body portion 242 of the insulating member 24, such that the gas in the battery 100 can enter the region of the gas permeable membrane assembly 40 through the first exhaust vent 291. In some embodiments, the second exhaust vent 292 is in communication with the first exhaust vent 291 to make gas exhausting smoother.

With reference to FIG. 14, FIG. 15, and FIG. 16a, according to some embodiments of the present application, the insulating member 24 is provided with a second boss 241 protruding from the main body portion 242; and the second boss 241 is arranged around the second exhaust vent 292 and extends toward the end cover 21 into the first exhaust vent 291. The second boss 241 extends into the region of the first exhaust vent 291 of the end cover 21, the side wall of the first exhaust vent 291 can be completely blocked the outside of the second boss 241, thereby achieving insulation.

In one embodiment, the second boss 241 is spaced from the gas permeable membrane 41. By means of spacing, the risk of damaging the membrane can be reduced.

In some embodiments, an extension height of the second boss 241 is lower than a top end of the first exhaust vent 291, that is, the second boss 241 can extend into the first exhaust vent 291 but does not penetrate beyond the region of the first exhaust vent 291, thereby preventing the second boss 241 from making contact with the gas permeable membrane assembly 40 to damage the gas permeable membrane assembly 40.

According to some embodiments of the present application, if the gas permeable membrane assembly 40 is arranged on the side of the end cover 21 facing the exterior of the shell, the recessed platform is designed on the end cover 21, so that a protruding region can be formed on the end cover 21 and faces the interior of the shell, and at this time, an accommodating portion recessed relative to the surface of the insulating member 24 can be arranged on the main body portion 242 of the insulating member 24, so as to accommodate the protruding part of the end cover 21.

With reference to FIG. 16a, the main body portion 242 of the insulating member 24 has an upper surface 242a which is arranged toward the end cover 21; the main body portion 242 of the insulating member 24 is provided with a sixth recessed platform S6 recessed relative to the upper surface 242a, and at least part of the wall portion boss 212 is located on the sixth recessed platform S6. By means of such arrangement, the wall portion boss 212 can be accommodated, thus decreasing the mounting height and reducing the space occupied inside the shell.

With reference to FIG. 16b, FIG. 16b is a partial cross-sectional schematic diagram of a battery cell 20 according to one or more embodiments. The battery cell 20 further includes an adapter plate 26, and the adapter plate 26 has a first surface 26a which is arranged toward the insulating member 24; the adapter plate 26 is provided with a seventh recessed platform S7 recessed relative to the first surface 26a, and the main body portion 242 of the insulating member 24 is provided with a main body boss 2421 that is protruded relative to the lower surface of the main body portion 242 of the insulating member 24; and at least part of the main body boss 2421 is located on the seventh recessed platform S7. By means of such arrangement, the wall portion boss 212 can be accommodated, thus decreasing the mounting height and reducing the space occupied inside the shell.

In some examples, the portion of the lower surface of the adapter 26 opposite to the seventh recessed platform S7 protrudes toward the interior of the battery cell 20, so as to enhance the strength of the adapter 26.

According to some embodiments of the present application, as shown in FIG. 1 and FIG. 2, the battery cell 20 further includes the pressure relief mechanism 70, the pressure relief mechanism 70 is arranged on the shell and is configured to be activated to release internal pressure of the battery cell 20 in thermal runaway.

The pressure relief mechanism 70 is arranged on the shell, or the end cover 21, or the case 22; and by way of example, in FIG. 1, the pressure relief mechanism 70 is arranged on the end cover 21.

The pressure relief mechanism 70 is configured to be activated to release the internal pressure of the battery cell 20 in thermal runaway, that is, once thermal runaway occurs in the battery cell 20, the pressure relief mechanism 70 can be activated and opened to release gases generated by thermal runaway in the battery cell 20. It is to be noted that once the battery cell 20 experiences thermal runaway, the gas in the shell of the battery cell 20 will rapidly increase to open the pressure relief mechanism 70 for pressure relief, however, during normal use of the battery cell 20, the gas generated in the shell can be exhausted through the gas permeable membrane assembly 40, but the pressure relief mechanism 70 cannot be opened.

Optionally, the pressure relief mechanism 70 and the shell can be integrally molded or arranged separately. If the pressure relief mechanism 70 and the shell are integrally molded, the pressure relief mechanism 70 is a region with a weak structure on the shell, for example, a region with notching groove on the shell; if the pressure relief mechanism 70 and the shell are arranged separately, the pressure relief mechanism 70 can be connected to the shell by welding, hot melting, injection molding, or adhering. By way of example, in FIG. 2, the pressure relief mechanism 70 and the shell are arranged separately, and the pressure relief mechanism 70 is mounted on the end cover 21 of the shell; and the pressure relief mechanism 70 can be a pressure relief component such as an explosion-proof valve, explosion-proof plate, pressure relief valve, or safety valve.

By way of example, in FIG. 1, both the electrode terminal 25 and the pressure relief mechanism 70 are arranged on the end cover 21; the battery cell 20 of this structure can save the space occupied by the battery cell 20; definitely, in other embodiments, the electrode terminal 25 and the pressure relief mechanism 70 can also be mounted on different walls of the shell; according to the battery cell 20 of this structure, the electrode terminal 25 configured to output or input electrical energy and the pressure relief mechanism 70 configured to discharge internal pressure can be kept apart, thus reducing the usage risk of the battery cell 20, for example, the pressure relief mechanism 70 is arranged on the case 22, and the electrode terminal 25 is arranged on the end cover 21.

By means of the gas permeable membrane assembly 40, the gas generated in the shell during normal use of the battery cell 20 can be exhausted outside the shell through the gas permeable membrane assembly 40, thus alleviating the phenomenon that the pressure relief mechanism 70 is prematurely activated to release pressure before thermal runaway due to increased internal pressure of the battery cell 20, further effectively improving the use stability of the battery cell 20, and prolonging the service life and improving the use reliability of the battery cell 20.

In some embodiments, the gas permeable membrane assembly 40 and the pressure relief mechanism 70 can be mounted on the same wall of the shell. For example, the gas permeable membrane assembly 40 and the pressure relief mechanism 70 are both arranged on the end cover 21. The battery cell 20 of this structure helps save the space occupied, thereby increasing the energy density of the battery cell 20.

In some embodiments, the gas permeable membrane assembly 40 and pressure relief mechanism 70 can be arranged on different walls of the shell. For example, the gas permeable membrane assembly 40 is arranged on the case 22, and the pressure relief mechanism 70 is arranged on the end cover 21. The battery cell 20 of this structure can reduce the mutual influence between the gas permeable membrane assembly 40 and the pressure relief mechanism 70, and is suitable for different usage environments.

In some embodiments, the gas permeable membrane assembly 40 is arranged on the wall on the top of the shell when the battery cell 20 is in a placement state. That is, regardless of the working environment of the battery cell 20, when placed, the wall facing upward is the wall on the top; by arranging the gas permeable membrane assembly 40 on the top wall, on one hand, it does not affect the stable placement of the battery 100, and on the other hand, the exhaust channel is not easily covered by external objects, thus providing a larger exhaust space; and moreover, the gas generally has a low density and is lighter, tending to rise, so placing the gas permeable membrane assembly 40 on the top wall facilitates smooth gas exhaust.

In some embodiments, the gas permeability rate of the gas permeable membrane 41 is 3-10 mL/day. It can be 3-4 mL/day, 4-6 mL/day, 5-8 mL/day, or 9-10 mL/day. The testing method for the gas permeability rate of gas permeable membrane 41 can be carried out with reference to GB/T1038-2000.

The gas permeability rate of gas permeable membrane 41 is set to 3-10 mL/day, thus the phenomenon that the pressure relief mechanism 70 to fail to actuate and open due to excessively fast gas exhaust of the gas permeable membrane assembly 40 can be relieved when the battery cell 20 experiences thermal runaway, the pressure relief mechanism 70 can be actuated to stably release the internal pressure of the battery cell 20 in thermal runaway, thereby reducing the risk of fire or explosion of the battery cell 20 in thermal runaway. Additionally, the system airtightness is taken into consideration to prevent excessively rapid gas exhaust to cause poor system airtightness, and airtightness of the system of the battery 100 is maintained while exhausting the gas.

In some embodiments, the thickness of the gas permeable membrane 41 is 0.1-3.0 mm, optionally, 0.2-0.8 mm. For example, it can be 0.1 mm, 0.5 mm, 1.0 mm, 1.5 mm, 2.0 mm, 2.5 mm, or 3.0 mm. This allows regulation of the gas permeability rate of the gas permeable membrane 41.

In some embodiments, the battery cell 20 is an alkali metal battery 100, for example, it can be a sodium metal battery 100, a lithium metal battery 100, etc. The alkali metal battery 100 is used in conjunction with the gas permeable membrane assembly 40 to timely exhaust the gas generated during normal operation of the alkali metal battery 100, thereby prolonging the service life of the alkali metal battery 100.

The electrode assembly 23 is mainly formed by winding or laminating a positive electrode plate and a negative electrode plate, and a separator is usually arranged between the positive electrode plate and the negative electrode plate. The parts with active substances of the positive electrode plate and the negative electrode plate form a main body part of the electrode assembly 23; and the parts without the active substances of the positive electrode plate and the negative electrode plate respectively form the electrode tabs. A positive electrode tab and a negative electrode tab can be jointly located at one end of the main body part or respectively positioned at two ends of the main body part. In the charge-discharge process of the battery 100, a positive electrode active substance and a negative electrode active substance react with the electrolyte, and the electrode tabs are connected to the electrode terminals 25 to form a current loop.

In one embodiment, the positive electrode plate includes a positive electrode current collector and a positive electrode active layer arranged at least one side of the positive electrode current collector, and the positive electrode active layer includes the positive electrode active material.

As an example, the positive electrode current collector has two opposite surfaces in the thickness direction, and the positive electrode active layer can be arranged on any one of or both the two opposite surfaces of the positive electrode current collector.

In one embodiment, the positive electrode current collector can be a metal foil or a composite current collector. For example, as the metal foil, an aluminum foil can be used. The composite current collector may include a polymer base layer and a metal layer formed on at least one surface of the polymer base layer. The composite current collector can be formed by forming a metal material (aluminum, aluminum alloy, nickel alloy, titanium, titanium alloy, silver, silver alloy and the like) on a polymer material substrate material (such as polypropylene (PP), polyethylene glycol terephthalate (PET), polybutylene terephthalate (PBT), Polystyrene (PS), Polyethylene (PE) and the like).

In one embodiment, the positive electrode material includes one or more of polyanionic positive electrode materials, phosphates positive electrode materials, sulfates positive electrode materials, silicates positive electrode materials, and borates positive electrode materials. For example, in the positive electrode active material of a sodium battery 100, polyanionic compounds include compounds based on phosphate and fluorophosphate. The compounds based on phosphate include Nax1Fey1Pm1On1, for example, sodium iron phosphate with high capacity, and sodium iron pyrophosphate with high voltage platform. The polyanionic compounds include one or more of sodium vanadium trifluorophosphate Na3V2(PO4)2F3, sodium vanadium fluorophosphate NaVPO4F, sodium vanadium phosphate Na3V2(PO4)3, Na4Fe3(PO4)2P2O7, NaFePO4, and Na3V2(PO4)3. Prussian blue compounds are NaxMM(CN)6, in which, M and M are one or more of Fe, Mn, Co, Ni, Cu, Zn, Cr, Ti, V, Zr, Ce, and 0 < x ≤ 2. In a lithium metal battery 100, the positive electrode active material can include at least one selected from the group consisting of lithium nickel cobalt manganese oxide, lithium nickel cobalt aluminum oxide, lithium iron phosphate, lithium cobalt oxide, lithium manganese oxide, or lithium manganese iron phosphate.

In one embodiment, the negative electrode plate includes a negative electrode current collector and a negative electrode active layer arranged on at least one surface of the negative active current collector, and the negative electrode active layer includes a negative electrode active material. In this embodiment, the battery cell 20 is an ion battery 100; and in the charge-discharge process of the battery 100, active ions (such as Li+, and Na+) intercalate/deintercalate into the negative electrode active material.

As an example, the negative electrode current collector has two opposite surfaces in the thickness direction, and the negative electrode active layer can be arranged on any one of or both the two opposite surfaces of the negative electrode current collector.

In one embodiment, the negative electrode current collector can be a metal foil or a composite current collector. For example, a copper foil can be used as the metal foil. The composite current collector can comprise a polymer material substrate layer and a metal layer formed on at least one surface of the polymer material substrate. The composite current collector can be obtained by forming a metal material (copper, copper alloy, nickel, nickel alloy, titanium, titanium alloy, silver, silver alloy and the like) on a polymer material substrate (polypropylene (PP), polyethylene terephthalate (PET), polybutylene terephthalate (PBT), Polystyrene (PS), Polyethylene (PE) and the like).

In one embodiment, the negative active material can include one or more of silicon-based materials, silicon-carbon materials, carbon materials, and selenium-based materials. Specifically, it includes to one or more of artificial graphite, natural graphite, hard carbon, soft carbon, silicon-based materials, and selenium-based materials. The silicon-based material may be selected from one or more of elemental silicon, a silicon oxide compound (e.g., silicon monoxide), a silicon-carbon composite, a silicon-nitrogen composite, and a silicon alloy. The selenium-based materials can selected from one or more of elemental tin, a selenium-oxygen compound, and a selenium alloy.

In one embodiment, the negative electrode plate includes a negative electrode current collector and a carbon-containing coating arranged on at least one surface of the negative electrode current collector. In this embodiment, the battery cell 20 is a metal battery 100, and during the charge-discharge process of the battery 100, active ions deposit/peel off at the negative electrode plate. The metal battery 100 can be an alkali metal battery 100, such as a lithium metal battery 100, a sodium metal battery 100, a potassium metal battery 100, a zinc metal battery 100, or an aluminum metal battery 100. The battery 100 of this type can also be called "anode-free battery 100". During charging, active ions (such as Na+) released from the positive electrode active material are deposited onto the negative electrode current collector to form sodium metal. The arranged carbon-containing coating helps achieve more uniform metal deposition. The carbon-containing material includes one or more of conductive carbon, graphite, hard carbon, and carbon nanotubes.

In other embodiments, a conductive film layer can also be deposited on the negative electrode current collector. For example, alloy materials, titanium-based materials, active metals (such as sodium metal), carbon-based materials with deposited metals, metal-containing composite materials, metal-containing alloy materials. The alloy materials include, but are not limited to, sodium-tin alloy, sodium-germanium alloy, and sodium-antimony alloy. The titanium-based materials include, but are not limited to, titanium dioxide, titanate, and titanium phosphate.

In one embodiment, the positive electrode active layer and the negative electrode active layer can also include a binder and a conductive agent. As an example, the binder can include at least one of polyvinylidene fluoride (PVDF), Polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and fluorine-containing acrylate resin. As an example, the conductive agent can include at least one of superconducting carbon, acetylene black, carbon black, Ketjen black, carbon dots, carbon nanotubes, graphene and carbon nanofibers.

In one embodiment, the separator can be any well-known porous separator with high chemical stability and mechanical stability.

In one embodiment, the material of the separator can be selected from the group consisting of at least one of glass fiber, non-woven fabric, polyethylene, polypropylene and polyvinylidene fluoride. The separator film can be either a single-layer thin film or a multi-layer composite thin film without special limitations. If the separator is the multi-layer composite film, the materials of all layers can be the same or different, which are not specially limited.

The electrolyte plays a role in conducting ions between the positive electrode plate and the negative electrode plate. The electrolyte can be liquid, gel or solid.

In some embodiments, the electrolyte is an electrolyte solution. The electrolyte solution includes electrolyte salt and a solvent. The electrolyte salt is dissolved to generate electrolyte ions, and electricity conduction is achieved by means of the movement of electrolyte ions within the electrolyte salt.

In one embodiment, in the sodium battery 100, the electrolyte salt includes sodium hexafluorophosphate (NaPF6), sodium bifluorosulfonylimide (NaFSI), sodium trifluoromethanesulfonate (CF3NaO3S), sodium sulfide (Na2S), and other sodium salts. The lithium battery 100 includes at least one lithium salt of lithium perchlorate, lithium hexafluoroarsenate, lithium hexafluorophosphate, lithium bisfluoromethylsulfonamide, lithium bisfluorosulfonamide, lithium difluorooxalate borate, lithium tetrafluoroborate, or lithium trifluoromethanesulfonate.

In one embodiment, the solvent includes one or more solvents of chain ethers, ethylene glycol dimethyl ether and derivatives thereof, diethylene glycol dimethyl ether, triethylene glycol dimethyl ether, tetraethylene glycol dimethyl ether, or cyclic ethers. Specifically, it includes dimethyl ether (DME), diethylene glycol diethyl ether, tetraethylene glycol dimethyl ether, 2,2,2,2-trifluoroether, ethylene glycol diethyl ether, triethylene glycol dimethyl ether, ethylene glycol dimethyl ether derivatives, methyl trifluoroethyl carbonate (FEMC), dioxano (DOL), acetonitrile (AN), fluorobenzene, triethyl phosphate (TEP), cyclobutoxide, 2-methyltetrahydrofuran, tetrahydrofuran, dimethyl sulfoxide, N,N dimethylacetamide, etc.

In one embodiments, the electrolyte solution can also include additives. For example, the additives can include a negative electrode film-forming additive and a positive electrode film-forming additive, and can also include additives that can improve certain properties of the battery 100, such as additives that can improve the overcharge performance of the battery 100, and additives that can improve the high-temperature or low-temperature performance of the battery 100.

According to some embodiments of the present application, the present application also provides a battery 100 which includes the battery cell 20 in any one of the solutions described above. With reference to FIG. 18, FIG. 18 is an exploded schematic structural diagram of a battery 100 according to one or more embodiments. The battery 100 includes a box 10 and a battery cell 20; and the battery cell 20 is accommodated within the box 10. The box 10 is used to provide an accommodating space for the battery cell 20, and the box 10 can be of various structures. In some embodiments, the box 10 may include a first portion 11 and a second portion 12, the first portion 11 and the second portion 12 covering each other, and the first portion 11 and the second portion 12 together defining the accommodating space for accommodating the battery cell 20. The second portion 12 may be of a hollow structure with an opening at one end, and the first portion 11 may be of a plate-like structure, where the first portion 11 covers the opening side of the second portion 12 so that the first portion 11 and the second portion 12 together define the accommodating space. The first portion 11 and the second portion 12 may each be of a hollow structure with an opening at one end, where the opening side of the first portion 11 covers the opening side of the second portion 12. Of course, the box 10 formed by the first portion 11 and the second portion 12 may be of a variety of shapes, such as a cylinder and a rectangular solid.

In the battery 100, there may be a plurality of battery cells 20 which can be connected in series or in parallel or in series-parallel, and the series-parallel connection refers to that the plurality of battery cells 20 are connected in series and in parallel. The plurality of battery cells 20 can be directly connected in series or in parallel or in series-parallel connection, and then the whole body formed by the plurality of battery cells 20 is accommodated in the box body 10; definitely, the battery 100 can also be in a form of a battery 100 module formed by connecting the plurality of battery cells 20 in series or in parallel or in series-parallel connection; and a plurality of batteries 100 modules are connected in series or in parallel or in series-parallel connection as a whole and are accommodated in the box body 10. The battery 100 can also include other structures, for example, the battery 100 can also include a bus part for realizing electric welding among the plurality of battery cells 20.

Each battery cell 20 can be a secondary battery 100 or a primary battery 100; in specific examples, it includes all types of primary batteries 100 or secondary batteries 100. For example, it can be different types of secondary batteries 100 such as the lithium battery 100, the sodium battery 100, or the potassium battery 100. The lithium secondary battery 100 can include a lithium metal secondary battery 100, a lithium-ion secondary battery 100, a lithium polymer secondary battery 100, or a lithium-ion polymer secondary battery 100. It can also be a lithium-sulfur battery 100, a sodium-ion battery 100, or a magnesium-ion battery 100, but not limited thereto. The battery cell 20 can be in a cylinder shape, a flat body shape, a cuboid shape or other shapes.

In some embodiments, the battery 100 can be an energy storage apparatus. The energy storage apparatus includes an energy storage container, an energy storage electric cabinet and the like.

According to some embodiments of the present application, the present application also provides an electrical device which includes the battery cell 20 in any one of the solutions described above, and the battery cell 20 is configured to provide electric energy for the electrical apparatus. The electrical device can be any device or system applying the battery cell 20.

In some embodiments, the purpose of the electrical equipment of the present application is not specifically limited, and it can be used in any electronic device known in the prior art. The battery 100 disclosed by the embodiment of the present application can be used in the electrical device using the battery 100 as a power source or various energy storage systems using the battery 100 as an energy storage element. That is, an electrical device is provided; in some embodiments, the electrical device in the present application can be used in, but is not limited to, notebook computers, pen-input computers, mobile computers, e-book readers, portable phones, portable fax machines, portable copiers, portable printers, over-ear stereo headphones, video cameras, LCD TVs, portable cleaners, portable CD players, mini-disc players, transceivers, electronic notebooks, calculators, memory cards, portable recorders, radios, backup power supplies, motors, cars, motorcycles, electric bicycles, bicycles, ships, spacecraft, lighting devices, toys, game consoles, clocks and watches, electric tools, flashlights, cameras, household large-capacity batteries 100, and lithium-ion capacitors.

For the electrical device, the battery cell 20, the battery 100 module or the battery pack can be selected according to the use requirements.

With reference to FIG. 19, FIG. 19 is a schematic structural diagram of a vehicle 1000 according to one or more embodiments. The vehicle 1000 may be a fuel vehicle, a gas vehicle or a new energy vehicle, and the new energy vehicle may be a pure electric vehicle, a hybrid electric vehicle or an extended-range vehicle and the like. A battery 100 is provided inside the vehicle 1000, and the battery 100 may be disposed at a bottom, or head, or tail of the vehicle 1000. The battery 100 may be configured to supply power to the vehicle 1000. For example, the battery 100 may be used as an operating power source of the vehicle 1000. The vehicle 1000 may further include a controller 200 and a motor 300. The controller 200 is used to control the battery 100 to supply power to the motor 300, for example, to supply power for starting, navigation and driving of the vehicle 1000.

In some embodiments of the present application, the battery 100 can serve as the operation power source of the vehicle 1000 and can also serve as a driving power source of the vehicle 1000, and replaces or partially replace fuel oil or natural gas to provide driving power for the vehicle 1000.

In the above embodiments, the gas permeable membrane assembly 40 is arranged to exhaust the gas in the battery cell 20 in the sealed state through the gas permeable membrane 41, and the gas in the shell of the battery 100 is timely exhausted to the outside, thus preventing the pressure in the shell of the battery 100 from being too high, reducing the risk of premature opening of the pressure relief mechanism 70, and significantly prolonging the service life of the battery 100. One battery cell 20 can be provided with one or more gas permeable membrane assemblies 40, and the position and method of arranging each gas permeable membrane assembly 40 can be different, for example, one gas permeable membrane assembly 40 can be arranged on the side of the end cover 21 facing the interior of the battery 100 shell, and another gas permeable membrane assembly 40 can be arranged on the side of the end cover 21 facing the exterior of the shell of the battery 100. One gas permeable membrane assembly 40 can be arranged on the end cover 21, while another gas permeable membrane assembly 40 is arranged on the case 22.

The above are only the embodiments of the present application and do not therefore limit the scope of the patent of the present application; any equivalent structures or equivalent process transformations made using the content of the specification and drawings of the present application, or directly or indirectly applied in other related technical fields, are similarly included within the scope of patent protection of the present application.

## Claims

1. A battery cell, comprising:
a shell having a wall portion, the wall portion being provided with a first exhaust vent which communicates the interior with the exterior of the shell; and
a gas permeable membrane assembly which is arranged on the wall portion, comprises a gas permeable membrane, and covers the first exhaust vent.

2. The battery cell according to claim 1, wherein
the battery cell further comprises a sealing member which is arranged between the gas permeable membrane assembly and the wall portion.

3. The battery cell according to claim 2, wherein
the sealing member is arranged between the gas permeable membrane and the wall portion.

4. The battery cell according to claim 2 or 3, wherein
the sealing member is arranged around the first exhaust vent; the sealing member is provided a second permeable hole, and the hole size of the second permeable hole is larger than that of the first exhaust vent; and the gas permeable membrane covers the second permeable hole.

5. The battery cell according to any one of claims 2 to 4, wherein
the gas permeable membrane assembly further comprises a connector which is provided with the first permeable hole, the gas permeable membrane is arranged on the connector and covers the first permeable hole; and the gas permeable membrane is arranged between the connector and the sealing member.

6. The battery cell according to any one of claims 2 to 5, wherein
the wall portion comprises a first recessed platform and a second recessed platform which are recessed relative to a surface of the wall portion; the first recessed platform is arranged around the second recessed platform and is closer to the surface of the wall portion than the second recessed platform; the second recessed platform is arranged around the first exhaust vent; at least part of the sealing member is located on the second recessed platform; and at least part of the gas permeable membrane assembly is located on the first recessed platform.

7. The battery cell according to claim 6, wherein
the second recessed platform comprises a platform surface, and the second recessed platform is also provided with a first boss protruding from the platform surface; and the first boss is spaced from the gas permeable membrane.

8. The battery cell according to claim 7, wherein
the first boss is an annular boss surrounding the first exhaust vent; or
a plurality of first bosses are provided and are arranged at intervals in a circumferential direction of the first exhaust vent.

9. The battery cell according to any one of claims 5 to 8, wherein
the connector is welded to the wall portion; or
the connector is in interference fit with the wall portion.

10. The battery cell according to claim 1, wherein
the wall portion is provided with a first recessed platform that is recessed relative to the wall portion, the first recessed platform is arranged around the first exhaust vent, and at least part of the gas permeable membrane assembly is located on the first recessed platform.

11. The battery cell according to claim 10, wherein
the wall portion comprises an outer surface and an inner surface which are arranged opposite each other, the outer surface is arranged toward the exterior of the shell, the inner surface is arranged toward the interior of the shell; and the wall portion is provided with the first recessed platform that is recessed relative to the inner surface of the wall portion.

12. The battery cell according to claim 11, wherein
the wall portion is further provided with a third recessed platform that is recessed relative to the inner surface of the wall portion, the first recessed platform is arranged around the third recessed platform and is closer to the inner surface of the wall portion than the third recessed platform; and the third recessed platform is arranged around the first exhaust vent.

13. The battery cell according to claim 11 or 12, wherein
the gas permeable membrane assembly further comprises a connector which is arranged on the first recessed platform, and the connector is provided with the first permeable hole;
the gas permeable membrane is arranged on the side of the connector facing the interior of the shell and covers the first permeable hole; or
the gas permeable membrane is arranged on the side of the connector facing the wall portion and covers the first permeable hole.

14. The battery cell according to claim 13, wherein
an orthogonal projection of the first permeable hole on the wall portion does not overlap with the region where the first exhaust vent is located.

15. The battery cell according to any one of claims 1 to 14, wherein
the gas permeable membrane assembly is arranged on the side of the wall portion facing the interior of the shell.

16. The battery cell according to any one of claims 1 to 10, wherein
the gas permeable membrane assembly is arranged on the side of the wall portion facing the exterior of the shell.

17. The battery cell according to claim 16, wherein
the wall portion is provided with an outer surface and an inner surface which are arranged opposite each other, the outer surface is arranged toward the exterior of the shell, the inner surface is arranged toward the interior of the shell; the wall portion is provided with a first recessed platform that is recessed relative to the outer surface, and at least part of the gas permeable membrane assembly is located inside the first recessed platform.

18. The battery cell according to claim 17, wherein
the gas permeable membrane assembly further comprises a connector which is arranged on the first recessed platform, and the connector is provided with a first permeable hole; and the gas permeable membrane is arranged on the side of the connector facing the wall portion and covers the first permeable hole.

19. The battery cell according to any one of claims 16 to 18, wherein
the wall portion comprises a wall portion body; the wall portion body has an outer surface and an inner surface which are arranged opposite each other, the outer surface is arranged toward the exterior of the shell, the inner surface is arranged toward the interior of the shell; the wall portion is provided with a wall portion boss that protrudes relative to the inner surface; and the orthogonal projection of the wall portion boss on the wall portion body at least partially overlaps with the orthogonal projection of the gas permeable membrane assembly on the wall portion body.

20. The battery cell according to any one of claims 16 to 19, further comprising:
an insulating element which is arranged on the side of the wall portion facing the interior of the shell, wherein the insulating member is provided with a second exhaust vent that penetrates through the insulating member, and the second exhaust vent is in communication with the first exhaust vent.

21. The battery cell according to claim 20, wherein
the insulating member is provided with a second boss that is protruded from the insulating member; and the second boss is arranged around the second exhaust vent and extends toward the wall portion into the first exhaust vent.

22. The battery cell according to claim 21, wherein
the second boss is spaced from the gas permeable membrane.

23. The battery cell according to any one of claims 20 to 22, wherein
the insulating member has an upper surface which is arranged toward the wall portion; the insulating member is provided with a sixth recessed platform that is recessed relative to the upper surface, the wall portion is provided with a wall portion boss protruding relative to the inner surface of the wall portion, and at least part of the wall portion boss is located on the sixth recessed platform.

24. The battery cell according to any one of claims 16 to 23, further comprising:
an adapter plate which has a first surface arranged toward the insulating member, wherein the adapter plate is provided with a seventh recessed platform that is recessed relative to the first surface, and the insulating member has a main body boss protruding relative to the lower surface of the insulating member, with at least part of the main body boss located on the seventh recessed platform.

25. The battery cell according to any one of claims 17 to 24, further comprising:
a shielding member which is mounted on the wall portion; the shielding member is located on the side of the wall portion facing the exterior of the shell and shields the gas permeable membrane assembly, wherein a first discharge channel is formed between the shielding member and the wall portion and communicates a gas outlet of the gas permeable membrane assembly with the exterior of the battery cell.

26. The battery cell according to claim 25, wherein
the wall portion is provided with a fourth recessed platform that is recessed relative to the outer surface of the wall portion; the fourth recessed platform is arranged around the first recessed platform and is closer to the outer surface of the wall portion than the first recessed platform; at least part of the gas permeable membrane assembly is arranged on the first recessed platform; and at least part of the shielding member is arranged on the fourth recessed platform.

27. The battery cell according to claim 26, wherein
the wall portion is further provided with a fifth recessed platform that is recessed relative to the outer surface of the wall portion, the fourth recessed platform is arranged around the fifth recessed platform, and the fifth recessed platform is located between the fourth recessed platform and first recessed platform.

28. The battery cell according to any one of claims 25 to 27, wherein
the first discharge channel comprise a first exhaust gap, and the first exhaust gap is formed between the shielding member and a side surface of the fourth recessed platform and is configured to communicate the gas outlet with the exterior of the shell.

29. The battery cell according to claim 28, wherein
the first discharge channel further comprises a second exhaust gap, and the second exhaust gap is formed between the shielding member and a bottom surface of the fourth recessed platform and communicates the first exhaust gap with the gas outlet.

30. The battery cell according to any one of claims 25 to 29, further comprising:
a protective patch, wherein the protective patch is arranged on the side of the wall portion facing the exterior of the shell and covers the shielding member.

31. The battery cell according to claim 30, wherein
the protective patch is provided with an information collection hole penetrating the protective patch, and an orthographic projection of the information collection hole on the wall portion is in the shielding member.

32. The battery cell according to any one of claims 1 to 15, further comprising:
a protective patch, wherein the protective patch is arranged on the side of the wall portion facing the exterior of the shell and covers the first permeable hole.

33. The battery cell according to any one of claims 30 to 32, wherein
the side of the protective patch facing the wall portion is provided with an adhesive layer, and the adhesive layer adheres the protective patch to the wall portion; and the adhesive layer is provided with an avoidance groove, and a second discharge channel is formed between the avoidance groove and the wall portion and communicates the first exhaust vent with the exterior of the battery cell.

34. The battery cell according to any one of claims 1 to 33, wherein
the gas permeable membrane assembly further comprises a connector which is provided with a first permeable hole, and the gas permeable membrane is arranged on the connector and covers the first permeable hole.

35. The battery cell according to claim 34, wherein
the connector is provided with a first annular recessed platform recessed relative to the surface of the connector, the first annular recessed platform is arranged around the first permeable hole, and the gas permeable membrane is arranged on the first annular recessed platform.

36. The battery cell according to claim 34 or 35, wherein
the gas permeable membrane assembly further comprises a backing member which is arranged between the gas permeable membrane and the connector; and a gas permeability of the backing member is greater than that of the gas permeable membrane.

37. The battery cell according to claim 36, wherein
the connector is further provided with a second annular recessed platform recessed relative to the surface of the connector, the second annular recessed platform is arranged around the first permeable hole, and at least part of the backing member is arranged on the second annular recessed platform;
optionally, an area of a groove where the second annular recessed platform is located is 30mm²-250mm², optionally, 60mm²-200mm².

38. The battery cell according to any one of claims 34 to 37, wherein
the first permeable hole comprises a plurality of circular through holes, and a diameter of the circular through holes is less than 3.0 mm.

39. The battery cell according to any one of claims 34 to 38, wherein
the connector is a metal member.

40. The battery cell according to any one of claims 1 to 39, wherein
a thickness of the gas permeable membrane is 0.1-3.0 mm, optionally, 0.2-0.8 mm.

41. The battery cell according to any one of claims 1 to 40, wherein
a gas permeability rate of the gas permeable membrane is 3-10 mL/day, optionally, 4-6 mL/day.

42. The battery cell according to any one of claims 1 to 41, wherein
the shell comprises:
a case in which an accommodating chamber with an opening is formed and configured to accommodate an electrode assembly; and
an end cover closing the opening,
wherein the end cover is the wall portion; or
the case comprises the wall portion; or
the wall portion is a wall of the battery cell on the top of the shell when in a placed state.

43. The battery cell according to any one of claims 1 to 42, wherein
a pressure relief mechanism is arranged in the shell and is configured to be actuated to release the internal pressure of the battery cell in the event of thermal runaway of the battery cell.

44. A battery, comprising the battery cell according to any one of claims 1 to 43.

45. An electrical device, comprising the battery cell according to any one of claims 1 to 43, wherein the battery cell is configured to provide electric energy.
